# EUROPEAN PATENT APPLICATION

(11) **EP 4 667 507 A1**
(43) Date of publication of application: **24.12.2025**
(21) Application number: 24756762.1
(22) Date of filing: 07.02.2024
(51) Int. Cl.: C08G 63/78, C08G 63/672, C08G 63/83, G02B 1/04

(54) **METHOD FOR PRODUCING THERMOPLASTIC RESIN, THERMOPLASTIC RESIN OBTAINED BY SAID PRODUCTION METHOD, AND OPTICAL LENS INCLUDING SAME**

(30) Priority: 15.02.2023 JP 2023021315
(71) Applicant: MITSUBISHI GAS CHEMICAL COMPANY, INC., Chiyoda-ku Tokyo 100-8324 (JP)
(72) Inventor: HIRAKAWA, Manabu, Tokyo 125-8601 (JP); HAKODA, Kazuya, Tokyo 125-8601 (JP); MURATA SUZUKI, Shoko, Kamisu-shi, Ibaraki 314-0102 (JP)
(74) Representative: Hoffmann Eitle
(86) International application number: PCT/JP2024/004030
(87) International publication number: WO 2024/171914

(57) **Abstract**

The present invention enables the provision of a method for producing a thermoplastic resin having a constituent unit (A) represented by the following formula, said method comprising: the step of reacting a crystal of a dicarboxylic acid diester represented by the following formula (a) with a diol compound, wherein the crystal of the dicarboxylic acid diester satisfies at least one of the requirements: (i) having a maximum melting endothermic temperature of 177°C to 181°C as measured by differential scanning calorimetric analysis; and (ii) having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation 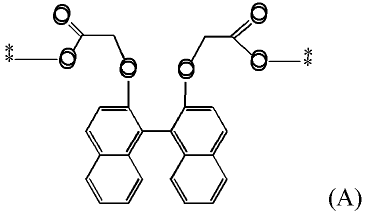 (in formula (A), an asterisk (*) represents a bonding site)

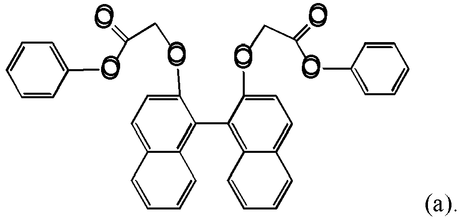

## Description

### Technical Field

The present invention relates to a method for producing a thermoplastic resin, a thermoplastic resin obtained by said production method, and an optical lens comprising the same.

As a material of optical lenses to be used in optical systems of various cameras such as cameras, film integrated type cameras and video cameras, an optical glass or an optical resin is used. Optical glasses are excellent in heat resistance, transparency, size stability, chemical resistance, etc., but have problems of high material costs, bad molding processability and low productivity.

Meanwhile, advantageously, optical lenses made of optical resins can be mass-produced by injection molding. As high refractive index materials for camera lenses, polycarbonate, polyester carbonate, polyester resins, etc. are used.

When using an optical resin as an optical lens, in addition to optical characteristics such as the refractive index and Abbe number, heat resistance, transparency, low water absorbability, chemical resistance, low birefringence, moist heat resistance, etc. are required. In particular, recently, optical lenses having a high refractive index and high heat resistance have been desired, and various resins have been developed (Patent Documents 1 to 5).

### Prior Art Documents

### Patent Documents

Patent Document 1: Japanese Laid-Open Patent Publication No. 2018-2893
Patent Document 2: Japanese Laid-Open Patent Publication No. 2018-2894
Patent Document 3: Japanese Laid-Open Patent Publication No. 2018-2895
Patent Document 4: Japanese Laid-Open Patent Publication No. 2018-59074
Patent Document 5: WO2017/078073

### Summary of the Invention

### Problem to be Solved by the Invention

The problem of the present invention is to provide a method for producing a thermoplastic resin that is excellent in reactivity and has an excellent hue.

### Means to Solve the Problem

As a result of repeating extensive and intensive efforts to solve the problem stated above, the inventors of the present invention have found that when a crystal of a dicarboxylic acid diester having a particular structure is used as a starting material, it is possible to obtain a thermoplastic resin that is excellent in reactivity and has an excellent hue. This finding led to the completion of the present invention.

Namely, the present invention includes the following aspects.
<1> A method for producing a thermoplastic resin having a constituent unit (A) represented by the following formula, said method comprising:
   the step of reacting a crystal of a dicarboxylic acid diester represented by the following formula (a) with a diol compound, wherein the crystal of the dicarboxylic acid diester satisfies at least one of the requirements: (i) having a maximum melting endothermic temperature of 177°C to 181°C as measured by differential scanning calorimetric analysis; and (ii) having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation 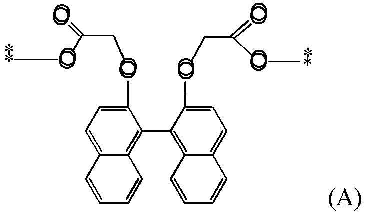 (in formula (A), an asterisk (*) represents a bonding site) 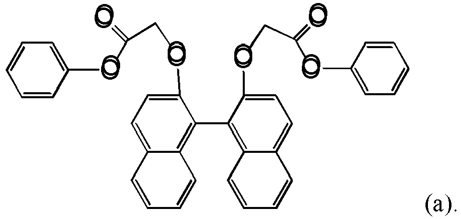
<2> The production method according to <1> above, wherein the crystal of the dicarboxylic acid diester satisfies both the requirements: (i) having a maximum melting endothermic temperature of 177°C to 181°C as measured by differential scanning calorimetric analysis; and (ii) having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation.
<3> The production method according to <1> or <2> above, wherein the thermoplastic resin is a polyester resin or a polyester carbonate resin.
<4> The production method according to any one of <1> to <3> above, wherein the thermoplastic resin comprises a constituent unit (B) derived from a monomer represented by the following general formula (b) and/or a constituent unit (C) derived from a monomer represented by the following general formula (c) 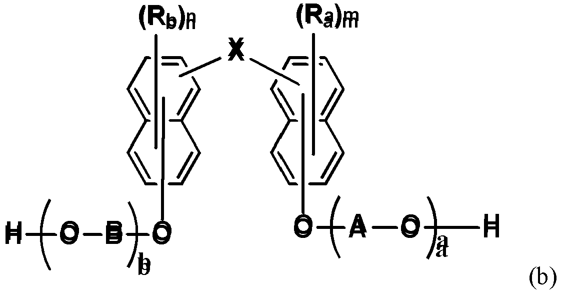 (in general formula (b),
   Rₐ and R_{b} are each independently selected from the group consisting of a hydrogen atom, a halogen atom, an optionally substituted alkyl group containing 1 to 20 carbon atoms, an optionally substituted alkoxyl group containing 1 to 20 carbon atoms, an optionally substituted cycloalkyl group containing 5 to 20 carbon atoms, an optionally substituted cycloalkoxyl group containing 5 to 20 carbon atoms, an optionally substituted aryl group containing 6 to 20 carbon atoms, an optionally substituted heteroaryl group containing 6 to 20 carbon atoms which contains one or more heterocyclic ring atoms selected from O, N and S, an optionally substituted aryloxy group containing 6 to 20 carbon atoms, and -C≡C-Rₕ,
   Rₕ represents an optionally substituted aryl group containing 6 to 20 carbon atoms, or an optionally substituted heteroaryl group containing 6 to 20 carbon atoms which contains one or more heterocyclic ring atoms selected from O, N and S,
   X is a single bond or represents an optionally substituted fluorene group,
   A and B each independently represent an optionally substituted alkylene group containing 1 to 5 carbon atoms,
   m and n each independently represent an integer of 0 to 6, and
   a and b each independently represent an integer of 0 to 10) 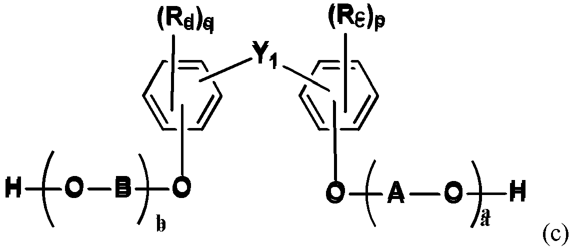 (in general formula (c),
   R_{c} and R_{d} are each independently selected from the group consisting of a hydrogen atom, a halogen atom, an optionally substituted alkyl group containing 1 to 20 carbon atoms, an optionally substituted alkoxyl group containing 1 to 20 carbon atoms, an optionally substituted cycloalkyl group containing 5 to 20 carbon atoms, an optionally substituted cycloalkoxyl group containing 5 to 20 carbon atoms, and an optionally substituted aryl group containing 6 to 20 carbon atoms,
   Y₁ is a single bond, an optionally substituted fluorene group, or any of structural formulae represented by the following formulae (1) to (7): 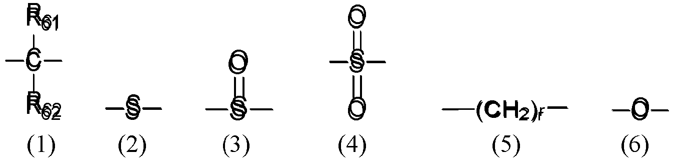 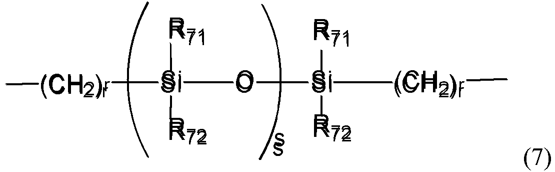 (in formulae (1) to (7),
   R₆₁, R₆₂, R₇₁ and R₇₂ each independently represent a hydrogen atom, a halogen atom, an optionally substituted alkyl group containing 1 to 20 carbon atoms, or an optionally substituted aryl group containing 6 to 30 carbon atoms, or alternatively, R₆₁ and R₆₂, or R₇₁ and R₇₂ are joined together to form an optionally substituted carbocyclic or heterocyclic ring containing 1 to 20 carbon atoms, and
   r and s each independently represent an integer of 0 to 5000)
   A and B each independently represent an optionally substituted alkylene group containing 1 to 5 carbon atoms,
   p and q each independently represent an integer of 0 to 4, and
   a and b each independently represent an integer of 0 to 10).
<5> The production method according to any one of <1> to <4> above, wherein a catalyst comprising an alkali metal or an alkaline earth metal is used.
<6> The production method according to any one of <1> to <5> above, wherein the catalyst is used in an amount of 0.1 to 10 ppm relative to the thermoplastic resin.
<7> The production method according to any one of <1> to <6> above, wherein the thermoplastic resin has a weight average molecular weight (Mw) of 10,000 to 100,000 when calculated as polystyrene.
<8> The production method according to any one of <1> to <7> above, wherein the thermoplastic resin has a **YI** of 0.1 to 14.
<9> A thermoplastic resin comprising a constituent unit (A) derived from a crystal of a dicarboxylic acid diester represented by the following formula (a), wherein the crystal of the dicarboxylic acid diester satisfies at least one of the requirements: (i) having a maximum melting endothermic temperature of 177°C to 181°C as measured by differential scanning calorimetric analysis; and (ii) having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation 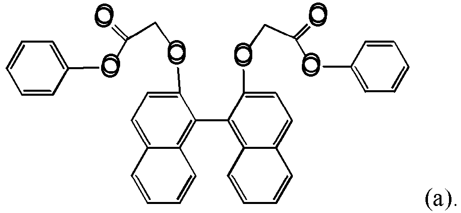
<10> The thermoplastic resin according to <9> above, wherein the crystal of the dicarboxylic acid diester (i) has a maximum melting endothermic temperature of 177°C to 181°C as measured by differential scanning calorimetric analysis, and (ii) has peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation.
<11> The thermoplastic resin according to <9> or <10> above, wherein the thermoplastic resin is a polyester resin or a polyester carbonate resin.
<12> An optical member, which comprises the thermoplastic resin according to any one of <9> to <11> above.
<13> An optical lens, which comprises the thermoplastic resin according to any one of <9> to <11> above.
<14> An optical film, which comprises the thermoplastic resin according to any one of <9> to <11> above.

### Effects of the Invention

The present invention enables the provision of a method for producing a thermoplastic resin that is excellent in reactivity and has an excellent hue.

In particular, among crystals of the dicarboxylic acid diester represented by the above formula (a), those having a maximum melting endothermic temperature of 177°C to 181°C as in <1> above and/or those having a powder X-ray diffraction pattern as in <1> above, when used, are advantageous in that the dicarboxylic acid diester, which is one of the starting materials of the thermoplastic resin, becomes higher in bulk density and is therefore easy to handle when introduced into a reaction vessel. Moreover, such crystals are also advantageous in that the amount of a catalyst to be added can be reduced due to their improved polymerization activity. As a result, it is more likely to obtain a resin that is excellent in color tone.

### Description of Embodiments

The present invention will be described in more detail below by way of the following synthesis examples and working examples, etc., although the present invention is not limited to these synthesis examples and working examples, etc., and any modifications may be made without greatly departing from the spirit of the present invention.

### <Thermoplastic resin and production method thereof>

One embodiment of the present invention is directed to a method for producing a thermoplastic resin having a constituent unit (A) represented by the following formula, said method comprising: the step of reacting a crystal of a dicarboxylic acid diester represented by the following formula (a) with a diol compound, wherein the crystal of the dicarboxylic acid diester satisfies at least one of the requirements: (i) having a maximum melting endothermic temperature of 177°C to 181°C as measured by differential scanning calorimetric analysis; and (ii) having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation 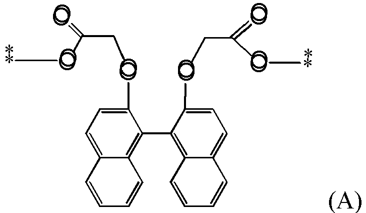 (in formula (A), an asterisk (*) represents a bonding site)

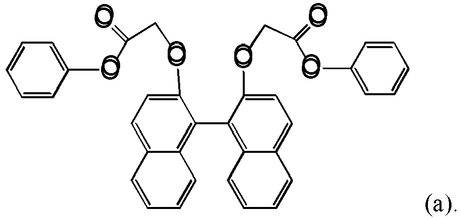

The inventors of the present invention have found that a crystal of the dicarboxylic acid diester represented by the above formula (a) (in phenyl ester form) is higher in reactivity than its similar members, i.e., the methyl ester form and carboxylic acid form, and its polymerization reaction proceeds with less catalyst. Moreover, probably because the phenyl ester form itself is high in heat stability, it has been found that the resulting thermoplastic resin is excellent in hue.

The crystal of the dicarboxylic acid diester represented by the above formula (a) may be prepared by a particular preparation method as described later, and its melting point (maximum melting endothermic temperature as measured by differential scanning calorimetric analysis) is 177°C to 181°C. Moreover, it has characteristic peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation, and preferably also has peaks at diffraction angles 2θ = 14.1 ± 0.2°, 16.1 ± 0.2°, 22.8 ± 0.2° and 25.0 ± 0.2°.

The crystal of the dicarboxylic acid diester represented by formula (a) may satisfy at least one of the following requirements: having a maximum melting endothermic temperature of 177°C to 181°C as measured by differential scanning calorimetric analysis; and having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation, and preferably satisfies both of these requirements.

How to prepare the crystal of the dicarboxylic acid diester represented by the above formula (a) will be described in more detail below.

### [Crystal of the dicarboxylic acid diester represented by formula (a)]

The crystal of the dicarboxylic acid diester represented by the above formula (a) can be prepared by a preparation method comprising: the step of reacting a compound represented by the following general formula (2) 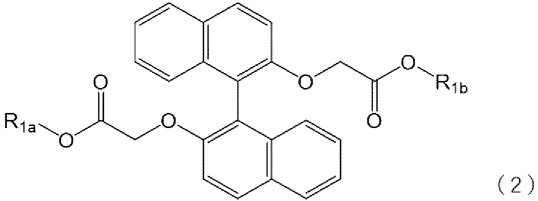
(wherein R_{1 a} and R_{1 b} each independently represent an optionally branched alkyl group containing 1 to 6 carbon atoms)
with diphenyl carbonate or phenyl acetate in the presence of an organic titanium compound (i.e., the reaction step); and the step of crystallizing the dicarboxylic acid diester represented by the above formula (a) using at least one organic compound selected from the group consisting of an aromatic hydrocarbon, an alcohol, an ether and an ester as a crystallization solvent (i.e., the crystallization step) in this order. The reaction step will be described in more detail below.

The alkyl group containing 1 to 6 carbon atoms intended in R_{1 a} and R_{1 b} in the above general formula (2) may be linear or branched, and examples include a methyl group, an ethyl group, a propyl group, a butyl group, a pentyl group, a hexyl group and so on.

The compound represented by the above general formula (2) may be purified in a standard manner before use (e.g., the crystal shown in JP 2021-017406 A), or may be used without purification (e.g., the compound of the above general formula (2) contained in the reaction mixture obtained upon reaction between 1,1'-bi-2-naphthol and a halogenated acetic acid ester). In particular, the dicarboxylic acid diester represented by formula (a) has low solubility in commonly used organic solvents such as aromatic hydrocarbons; and hence even when the compound represented by the above general formula (2) is used without purification as a starting material, impurities contained in the previous step can be easily removed by crystallization after the reaction.

Examples of an organic titanium compound include alkoxytitanium catalysts and so on. Examples of alkoxytitanium catalysts include titanic acid tetramethyl ester, tetra-n-propyl ester, tetraisopropyl ester, tetra-n-butyl ester, tetraisobutyl ester, tetra-tert-butyl ester, tetra-2-ethylhexyl ester, tetraoctyl ester, tetraphenyl ester, tetrabenzyl ester and tetratolyl ester, etc. These organic titanium compounds may be used either alone or in combination.

The amount of an organic titanium compound to be used may be, for example, 0.025 to 0.10 moles relative to 1 mole of the compound represented by the above general formula (2).

The amount of diphenyl carbonate or phenyl acetate to be used may be, for example, 4 to 25 moles relative to 1 mole of the compound represented by the above general formula (2).

The reaction of the compound represented by the above general formula (2) with diphenyl carbonate or phenyl acetate may be accomplished by using diphenyl carbonate or phenyl acetate as a solvent, or may be accomplished in the presence of an additional organic solvent other than diphenyl carbonate or phenyl acetate. Examples of such an additional organic solvent include aromatic hydrocarbons. Examples of aromatic hydrocarbons include toluene, xylene, mesitylene and so on. Moreover, in the case of using an additional organic solvent, the amount to be used may be, for example, 0.05 to 5.0 parts by weight relative to 1 part by weight of the compound represented by the above general formula (2). These additional organic solvents may be used either alone or in combination.

The reaction of the compound represented by the above general formula (2) with diphenyl carbonate or phenyl acetate may be accomplished, for example, at 130°C to 170°C. Moreover, the reaction may optionally be accomplished under normal pressure or under reduced pressure while removing by-products. When the reaction is accomplished under reduced pressure, the internal pressure may be, for example, 0.67 to 6.7 kPa.

After completion of the reaction step, the resulting reaction mixture may be subjected to the crystallization step to thereby obtain the crystal of the dicarboxylic acid diester represented by the above formula (a). It should be noted that before being subjected to the crystallization step, the reaction mixture obtained after completion of the reaction step may optionally be worked up by neutralization, water washing, etc., or may optionally be concentrated. The crystallization step will be described in more detail below.

The solvent to be used in the crystallization step (crystallization solvent) is at least one organic compound selected from the group consisting of an aromatic hydrocarbon, an alcohol, an ether and an ester. Examples of an aromatic hydrocarbon include toluene, xylene, mesitylene and so on. Examples of an alcohol include optionally branched alcohols containing 1 to 6 carbon atoms, as exemplified by methanol, ethanol, propanol, butanol, pentanol, hexanol and so on. Examples of an ether include diethyl ether, tetrahydrofuran, cyclopentyl methyl ether and so on. Examples of an ester include ethyl acetate, propyl acetate, butyl acetate and so on. Among these crystallization solvents, an aromatic hydrocarbon is preferred. These crystallization solvents may be used either alone or in combination, but are preferably used alone in terms of reduced environmental load and costs because a single solvent can be more easily recycled.

The amount of the crystallization solvent to be used may be, for example, 1 to 10 parts by weight relative to 1 part by weight of the dicarboxylic acid diester represented by the above formula (a). It should be noted that the amount of the dicarboxylic acid diester represented by the above formula (a) contained in the reaction mixture may be measured, for example, using liquid chromatography by the absolute calibration method or the internal standard method, etc.

The dicarboxylic acid diester represented by the above formula (a) may be crystallized, for example, as follows: the dicarboxylic acid diester represented by the above formula (a) is dissolved in a crystallization solvent, and the resulting solution is then cooled to precipitate crystals, and the precipitated crystals are collected by filtration. The temperature at which the dicarboxylic acid diester represented by the above formula (a) is dissolved in a crystallization solvent may be, for example, below the boiling point of the solvent used up to 115°C. The temperature at which the resulting solution is cooled to precipitate crystals may be, for example, 80°C to 100°C. It should be noted that seed crystals may be used for precipitation of crystals, but the dicarboxylic acid diester represented by the above formula (a) can be crystallized without using seed crystals; and hence crystallization can be easily accomplished without requiring the above complicated step to precipitate crystals as in 2,2'-bis(ethoxycarbonylmethoxy)-1,1'-binaphthyl.

Then, further cooling may optionally be performed. The cooling rate in this case may be, for example, 0.1°C to 20°C/minute, and the temperature at which cooling is stopped may be, for example, 0°C to 25°C. Then, crystals may be taken out by standard techniques such as filtration, centrifugation, etc. The crystals thus taken out usually contain the solvent, but the solvent can be removed by drying. Drying may be accomplished, for example, by heating under normal pressure or under reduced pressure. The temperature for heating may be, for example, 70°C to 90°C.

The thus obtained crystal of the dicarboxylic acid diester represented by the above formula (a) may further be purified by recrystallization, distillation, adsorption, column chromatography, etc.

### [Other dicarboxylic acids or ester-forming derivatives thereof]

If the method for producing a thermoplastic resin according to the present invention is a method for producing a polyester carbonate resin, other dicarboxylic acids or ester-forming derivatives thereof may be used in the range of 30 mol% or less in addition to the crystal of the dicarboxylic acid diester represented by the above formula (a). The dicarboxylic acids or ester-forming derivatives thereof for use in the step of obtaining intermediate products may be dicarboxylic acids or ester-forming derivatives thereof commonly used in the art and known for the production of intermediate products.

Examples of such dicarboxylic acids include aliphatic dicarboxylic acids (e.g., malonic acid, succinic acid, glutaric acid, adipic acid, pimelic acid, suberic acid, azelaic acid, methylmalonic acid, ethylmalonic acid), monocyclic aromatic dicarboxylic acids (e.g., phthalic acid, isophthalic acid, terephthalic acid), polycyclic aromatic dicarboxylic acids (e.g., 2,6-naphthalenedicarboxylic acid, 2,7-naphthalenedicarboxylic acid, 2,3-naphthalenedicarboxylic acid, 1,4-naphthalenedicarboxylic acid, 1,8-naphthalenedicarboxylic acid, anthracenedicarboxylic acid, phenanthrenedicarboxylic acid, 2,2'-bis(carboxymethoxy)-1,1'-binaphthyl, 9,9-bis(carboxymethyl)fluorene, 9,9-bis(2-carboxyethyl)fluorene, 9,9-bis(1-carboxyethyl)fluorene, 9,9-bis(1-carboxypropyl)fluorene, 9,9-bis(2-carboxypropyl)fluorene, 9,9-bis(2-carboxy-1-methylethyl)fluorene, 9,9-bis(2-carboxy-1-methylpropyl)fluorene, 9,9-bis(2-carboxybutyl)fluorene, 9,9-bis(2-carboxy-1-methylbutyl)fluorene, 9,9-bis(5-carboxypentyl)fluorene, 9,9-bis(carboxycyclohexyl)fluorene), biphenyldicarboxylic acids (e.g., 2,2'-biphenyldicarboxylic acid), and alicyclic dicarboxylic acids (e.g., 1,4-cyclohexanedicarboxylic acid, 2,6-decalindicarboxylic acid), with isophthalic acid, terephthalic acid, 2,6-naphthalenedicarboxylic acid and 2,2'-bis(carboxymethoxy)-1,1'-binaphthyl being preferred. These dicarboxylic acids may be used either alone or in combination. Moreover, ester-forming derivatives available for use include acid chlorides of the above carboxylic acids, and their ester forms such as methyl ester, ethyl ester, phenyl ester, etc.

For example, a compound represented by the following general formula (C) is also preferred for use as a dicarboxylic acid.

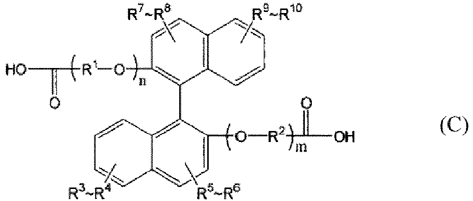

In the above formula, R¹ and R² each independently represent a hydrocarbon group which may comprise an aromatic group containing 1 to 10 carbon atoms, and n and m each independently represent an integer of 0 or more. R³ to R¹⁰ each independently represent a hydrogen atom, a fluorine atom, a chlorine atom, a bromine atom, an iodine atom, or a hydrocarbon group which may comprise an aromatic group containing 1 to 20 carbon atoms.

Representative specific examples of a dicarboxylic acid represented by general formula (C) or an ester-forming derivative thereof are shown below, but are not limited thereto.

Examples include 2,2'-dicarboxy-1,1'-binaphthyl, 2,2'-bis(carboxymethoxy)-1,1'-binaphthyl, 2,2'-bis(2-carboxyethoxy)-1,1'-binaphthyl, 2,2'-bis(3-carboxypropoxy)-1,1'-binaphthyl, 2,2'-dimethoxycarbonyl-1,1'-binaphthyl, 2,2'-bis(methoxycarbonylmethoxy)-1,1'-binaphthyl, 2,2'-bis(2-methoxycarbonylethoxy)-1,1'-binaphthyl, 2,2'-bis(3-methoxycarbonylpropoxy)-1,1'-binaphthyl, 2,2'-diethoxycarbonyl-1,1'-binaphthyl, 2,2'-bis(ethoxycarbonylmethoxy)-1,1'-binaphthyl, 2,2'-bis(2-ethoxycarbonylethoxy)-1,1'-binaphthyl, 2,2'-bis(3-ethoxycarbonylpropoxy)-1,1'-binaphthyl, 2,2'-diphenoxycarbonyl-1,1'-binaphthyl, 2,2'-bis(2-phenoxycarbonylethoxy)-1,1'-binaphthyl, 2,2'-bis(3-phenoxycarbonylpropoxy)-1,1'-binaphthyl, 2,2'-di-tert-butoxycarbonyl-1,1'-binaphthyl, 2,2'-bis(tert-butoxycarbonylmethoxy)-1,1'-binaphthyl, 2,2'-bis(2-tert-butoxycarbonylethoxy)-1,1'-binaphthyl, 2,2'-bis(3-tert-butoxycarbonylpropoxy)-1,1'-binaphthyl and so on. Among them, preferred is a compound of general formula (C) wherein R¹ and R² are each a methylene group, o and p are each 1, and R³ to R¹⁰ are each a hydrogen atom, i.e., 2,2'-bis(carboxymethoxy)-1,1'-binaphthyl or an ester-forming derivative thereof.

Another embodiment of the present invention is directed to a thermoplastic resin comprising a constituent unit (A) derived from a crystal of a dicarboxylic acid diester represented by the following formula (a), wherein the crystal of the dicarboxylic acid diester has a maximum melting endothermic temperature of 177°C to 181°C as measured by differential scanning calorimetric analysis

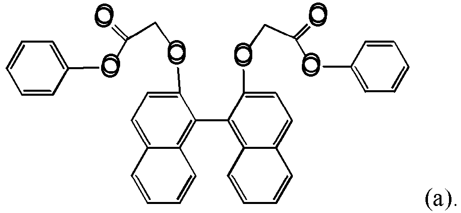

The crystal of the dicarboxylic acid diester represented by the above formula (a) has a melting point (maximum melting endothermic temperature as measured by differential scanning calorimetric analysis) of 177°C to 181°C. Moreover, it has characteristic peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation, and preferably also has peaks at diffraction angles 2θ = 14.1 ± 0.2°, 16.1 ± 0.2°, 22.8 ± 0.2° and 25.0 ± 0.2°.

The thermoplastic resin according to one embodiment of the present invention is not limited in any way and may be a polyester resin, a polycarbonate resin, a polyester carbonate resin, an epoxy resin, a polyurethane resin, a polyacrylic acid ester resin, a polymethacrylic acid ester resin or the like, but preferred is a polyester carbonate resin or a polyester resin.

In the thermoplastic resin according to one embodiment of the present invention, there is no particular limitation on the ratio of the constituent unit (A) represented by the above formula among all the constituent units, but the ratio is preferably 1 to 80 mol%, more preferably 1 to 60 mol%, and particularly preferably 5 to 50 mol% among all the constituent units.

Namely, the thermoplastic resin according to one embodiment of the present invention may comprise not only the constituent unit (A) represented by the above formula, but also a constituent unit derived from an aliphatic dihydroxy compound and/or a constituent unit derived from an aromatic dihydroxy compound, each being generally used as a constituent unit for a polycarbonate resin or a polyester carbonate resin.

In more detail, examples of such an aliphatic dihydroxy compound include various candidates, as particularly exemplified by 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, 1,6-hexanediol, etc.

Examples of such an aromatic dihydroxy compound include various candidates, as particularly exemplified by 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, and bis(4-hydroxyphenyl)ketone, bisphenoxyethanolfluorene, etc.

Moreover, the thermoplastic resin according to one embodiment of the present invention preferably comprises a constituent unit (B) derived from a monomer represented by the following general formula (b).

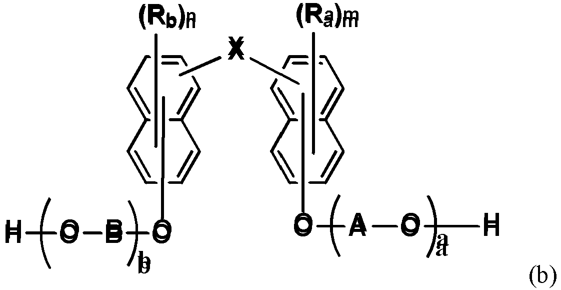

In general formula (b), Rₐ and R_{b} are each independently selected from the group consisting of a halogen atom, an optionally substituted alkyl group containing 1 to 20 carbon atoms, an optionally substituted alkoxyl group containing 1 to 20 carbon atoms, an optionally substituted cycloalkyl group containing 5 to 20 carbon atoms, an optionally substituted cycloalkoxyl group containing 5 to 20 carbon atoms, an optionally substituted aryl group containing 6 to 20 carbon atoms, an optionally substituted heteroaryl group containing 6 to 20 carbon atoms which contains one or more heterocyclic ring atoms selected from O, N and S, an optionally substituted aryloxy group containing 6 to 20 carbon atoms, and -C≡C-Rₕ. Rₕ represents an optionally substituted aryl group containing 6 to 20 carbon atoms, or an optionally substituted heteroaryl group containing 6 to 20 carbon atoms which contains one or more heterocyclic ring atoms selected from O, N and S.

Rₐ and R_{b} are each preferably a hydrogen atom, an optionally substituted aryl group containing 6 to 20 carbon atoms, or an optionally substituted heteroaryl group containing 6 to 20 carbon atoms which contains one or more heterocyclic ring atoms selected from O, N and S, more preferably a hydrogen atom or an optionally substituted aryl group containing 6 to 20 carbon atoms, and even more preferably a hydrogen atom or an optionally substituted aryl group containing 6 to 12 carbon atoms.

In general formula (b), X is a single bond or represents an optionally substituted fluorene group. X is preferably a single bond or an optionally substituted fluorene group containing 12 to 20 carbon atoms in total.

In general formula (b), A and B are each independently an optionally substituted alkylene group containing 1 to 5 carbon atoms, and preferably an alkylene group containing 2 or 3 carbon atoms.

In general formula (b), m and n are each independently an integer of 0 to 6, preferably an integer of 0 to 3, and more preferably 0 or 1.

In general formula (b), a and b are each independently an integer of 0 to 10, preferably an integer of 1 to 3, and more preferably 1 or 2.

Specific examples of the constituent unit (B) include those derived from 2,2'-bis(2-hydroxyethoxy)-1,1'-binaphthalene (BNE), DPBHBNA and so on.

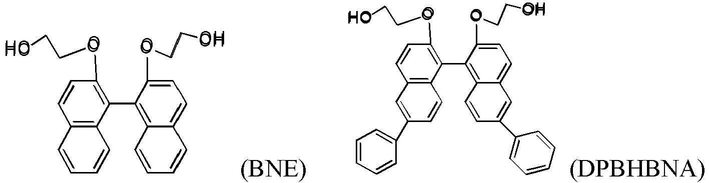

Moreover, the thermoplastic resin according to one embodiment of the present invention preferably has a constituent unit (C) derived from a monomer represented by the following general formula (c).

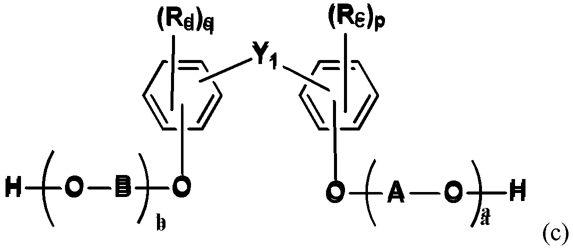

In general formula (c), R_{c} and R_{d} are each independently selected from the group consisting of a halogen atom, an optionally substituted alkyl group containing 1 to 20 carbon atoms, an optionally substituted alkoxyl group containing 1 to 20 carbon atoms, an optionally substituted cycloalkyl group containing 5 to 20 carbon atoms, an optionally substituted cycloalkoxyl group containing 5 to 20 carbon atoms, and an optionally substituted aryl group containing 6 to 20 carbon atoms.

R_{c} and R_{d} are each preferably a hydrogen atom, an optionally substituted aryl group containing 6 to 20 carbon atoms, or an optionally substituted heteroaryl group containing 6 to 20 carbon atoms which contains one or more heterocyclic ring atoms selected from O, N and S, more preferably a hydrogen atom or an optionally substituted aryl group containing 6 to 20 carbon atoms, and even more preferably a hydrogen atom or an optionally substituted aryl group containing 6 to 12 carbon atoms.

In general formula (c), Y₁ is a single bond, an optionally substituted fluorene group, or any of structural formulae represented by the following formulae (1) to (7), and preferably a single bond or a structural formula represented by the following formula (1).

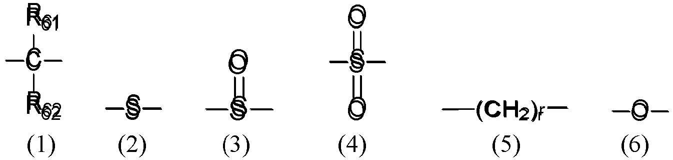

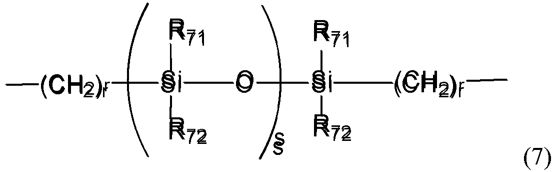

In formulae (1) to (7), R₆₁, R₆₂, R₇₁ and R₇₂ each independently represent a hydrogen atom, a halogen atom, an optionally substituted alkyl group containing 1 to 20 carbon atoms, or an optionally substituted aryl group containing 6 to 30 carbon atoms, or alternatively, R₆₁ and R₆₂, or R₇₁ and R₇₂ are joined together to form an optionally substituted carbocyclic or heterocyclic ring containing 1 to 20 carbon atoms.

In formulae (1) to (7), r and s are each independently an integer of 0 to 5000.

In the above general formula (c), A and B are each independently an optionally substituted alkylene group containing 1 to 5 carbon atoms, and preferably an alkylene group containing 2 or 3 carbon atoms. In the above general formula (c), p and q are each independently an integer of 0 to 4, and preferably 0 or 1. In addition, in the above general formula (c), a and b are each independently an integer of 0 to 10, preferably an integer of 0 to 5, and more preferably an integer of 0 to 2, e.g., 0 or 1.

Specific examples of the constituent unit (C) include those derived from BPEF (9,9-bis(4-(2-hydroxyethoxy)phenyl)fluorene), BPPEF (9,9-bis(4-(2-hydroxyethoxy)-3-phenylphenyl)fluorene), 9,9-bis[6-(2-hydroxyethoxy)naphthalen-2-yl]fluorene (BNEF), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanolfluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene)bis(2-methylphenol)), TrisP-HAP (4,4',4''-ethylidenetrisphenol), 1,1-bis(4-hydroxyphenyl)-1-phenylethane (BPAP), 1,1-bis(4-hydroxyphenyl)cyclododecane (HPCD), 1,1-bis(4-hydroxyphenyl)cyclohexane (BPZ), 9,9-bis(4-hydroxy-3-methylphenyl)fluorene (BCFL), bis(4-hydroxyphenyl)diphenylmethane (BPBP), 1,3-bis(1-methyl-1-phenylethyl)benzene (BPM) and so on. Among them, preferred as the constituent unit (C) are those derived from BPEF, BNEF, or BCFL.

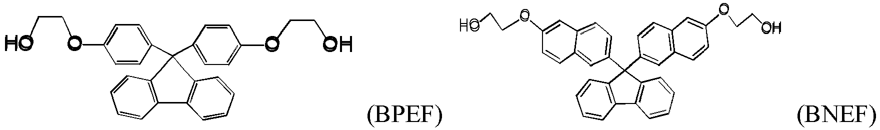

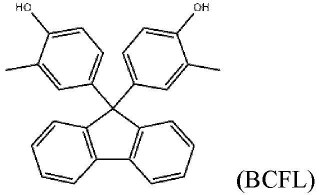

The thermoplastic resin according to one embodiment of the present invention comprises the constituent unit (A) as an indispensable unit, and may be configured not only as a polymer comprising the constituent unit (B) but not comprising the constituent unit (C) or as a polymer comprising the constituent unit (C) but not comprising the constituent unit (B), but also as a copolymer having both the constituent unit (B) and the constituent unit (C) or as a mixture of a polymer having the constituent unit (B) and a polymer having the constituent unit (C), or any combination thereof. A polymer comprising the constituent unit (C) but not comprising the constituent unit (B) may be exemplified by those having constituent units of the following formulae (I-1) to (I-3), while a copolymer having both the constituent unit (B) and the constituent unit (C) may be exemplified by those having constituent units of the following formulae (II-1) to (II-4). 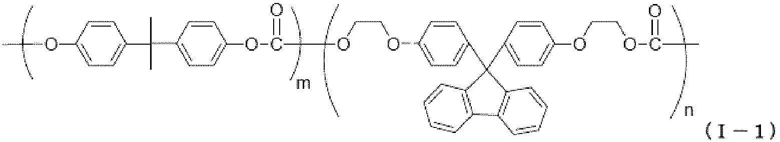 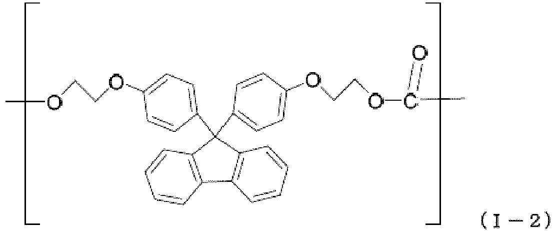 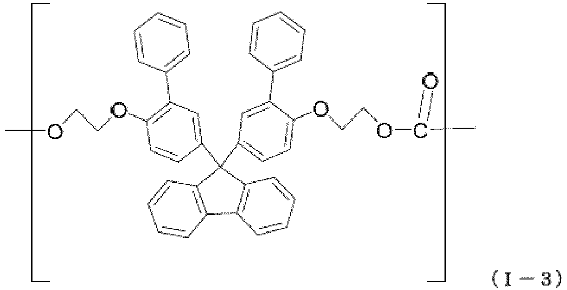 (in formula (I-1), m and n are each an integer of 1 to 10, preferably an integer of 1 to 5, and more preferably 1, and
the number of repeating units in formula (I-2) and formula (I-3) is an integer of 1 to 10, preferably an integer of 1 to 5, and more preferably 1).

Moreover, as a polymer having multiple types of constituent units, a block copolymer and a random copolymer, where m and n are large values, e.g., 100 or more, may each be selected for use. However, a random copolymer is preferred, and a random copolymer where m and n are each 1 is more preferred for use. 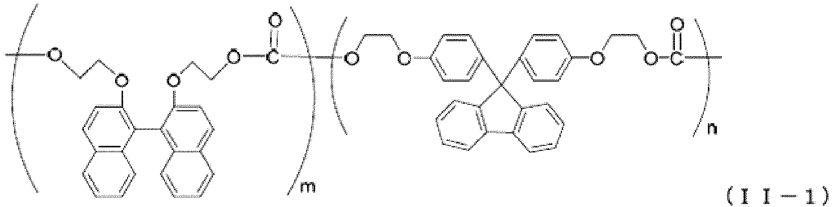 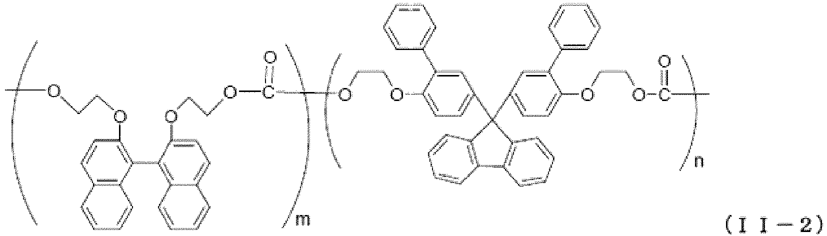 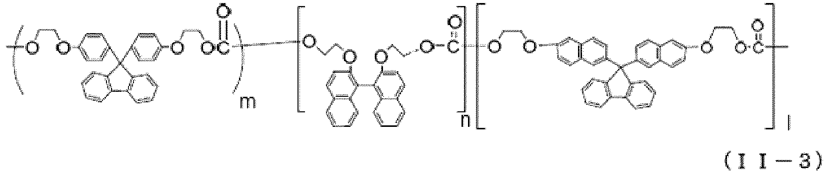 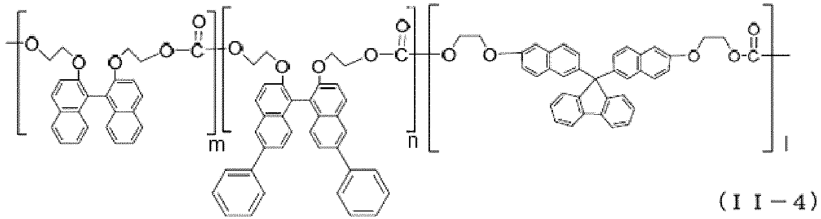 (in formulae (II-1) to (II-4), m, n and l are each independently an integer of 1 to 10, preferably an integer of 1 to 5, and more preferably 1).

Moreover, as a polymer having multiple types of constituent units, a block copolymer and a random copolymer, where m and n (or m, n and l) are large values, e.g., 100 or more, may each be selected for use. However, a random copolymer is preferred, and a random copolymer where m and n (or m, n and l) are each 1 is more preferred for use.

In the copolymer, the molar ratio between the constituent unit (B) and the constituent unit (C) is preferably 1:99 to 99:1, more preferably 10:90 to 90:10, even more preferably 15:85 to 85:15, and particularly preferably 30:70 to 70:30. Likewise, in the mixture, the mass ratio between the polymer having the constituent unit (B) and the polymer having the constituent unit (C) is preferably 1:99 to 99:1, more preferably 10:90 to 90:10, even more preferably 15:85 to 85:15, and particularly preferably 30:70 to 70:30.

The thermoplastic resin according to one embodiment of the present invention preferably further comprises a constituent unit derived from at least one monomer selected from the group of monomers shown below. 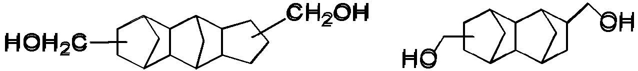 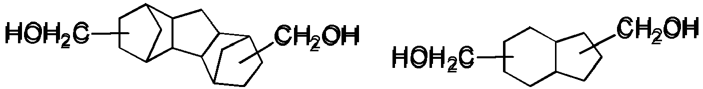 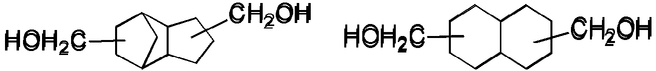 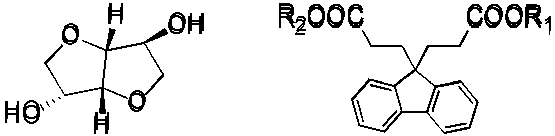 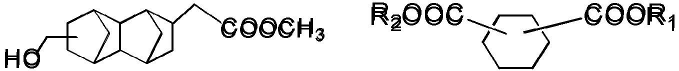 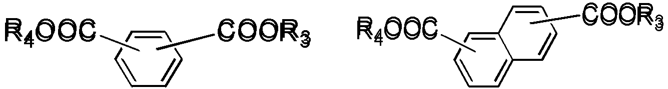 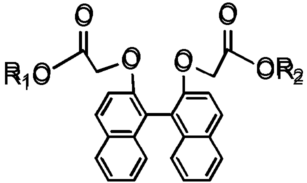 (in the above formulae, R₁ and R₂ each independently represent a hydrogen atom, a methyl group or an ethyl group, and R₃ and R₄ each independently represent a hydrogen atom, a methyl group, an ethyl group or an alkylene glycol containing 2 to 5 carbon atoms).

Moreover, the thermoplastic resin according to one embodiment of the present invention preferably comprises a constituent unit (D) derived from a monomer represented by the following general formula (16). In this case, the content of a constituent unit (D) derived from a monomer represented by general formula (16) is preferably 1 to 50 mol%, and more preferably 1 to 30 mol% among all the constituent units.

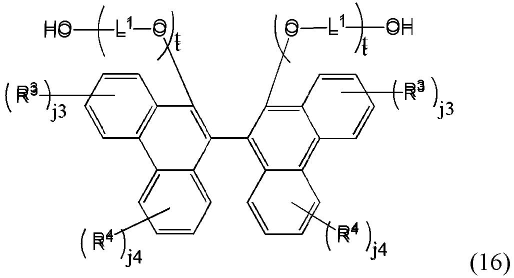

**In** general formula (16),
each L¹ independently represents a divalent linking group;
R³ and R⁴ each independently represent a halogen atom, or a substituent containing 1 to 20 carbon atoms which may contain an aromatic group;
j3 and j4 each independently represent an integer of 0 to 4; and
t represents an integer of 0 or 1.

In the above general formula (16), each L¹ independently represents a divalent linking group. L¹ is preferably an optionally substituted alkylene group containing 1 to 12 carbon atoms, more preferably an alkylene group containing 1 to 5 carbon atoms, even more preferably an alkylene group containing 2 or 3 carbon atoms, and particularly preferably an ethylene group. The alkylene group L¹ may be substituted with an alkyl group, a cycloalkyl group, an aryl group, an alkoxyl group or any combination thereof, and specific examples of these groups include a methyl group, an ethyl group, a n-propyl group, an isopropyl group, a phenyl group, a methoxy group, an ethoxy group and so on.

R³ and R⁴, if any, each independently represent a halogen atom, or a substituent containing 1 to 20 carbon atoms which may contain an aromatic group. Examples of a halogen atom include a fluorine atom, a chlorine atom, a bromine atom and so on, while examples of a substituent containing 1 to 20 carbon atoms which may contain an aromatic group include a methyl group, a phenyl group, a naphthyl group, a thienyl group, a benzothienyl group and so on. The naphthyl group intended here includes a 1-naphthyl group, a 2-naphthyl group and so on, and the thienyl group intended here includes a 2-thienyl group, a 3-thienyl group and so on. Likewise, the benzothienyl group intended here includes a 2-benzo[b]thienyl group, a 3-benzo[b]thienyl group and so on. These groups may further have a substituent(s), and examples of such a substituent include those given above for the alkylene group L¹, but are not limited thereto.

j3 and j4 each independently represent an integer of 0 to 4. j3 and j4 are each preferably an integer of 0 to 2, more preferably 0 or 1, and particularly preferably 0.

t represents an integer of 0 or 1, and preferably 1.

The monomer represented by general formula (16) preferably has a structure represented by the following formula (16').

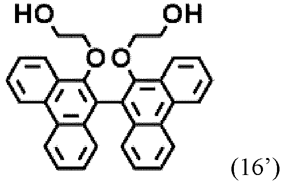

### <Production method for a polyester carbonate resin>

A polyester carbonate resin according to a preferred aspect of the present invention may be produced by melt polycondensation techniques starting from the crystal of the dicarboxylic acid diester constituting the above constituent unit (A), a diol compound and a carbonic acid diester. Examples of the above diol compound include an aliphatic dihydroxy compound and an aromatic dihydroxy compound as described above, but preferably include the monomer represented by the above general formula (b) and/or the monomer represented by the above general formula (c). **In** this reaction, a polyester carbonate resin may be produced in the presence of a basic compound catalyst, a transesterification catalyst or a mixed catalyst consisting of both as a polycondensation catalyst.

Examples of a carbonic acid diester include diphenyl carbonate, ditolyl carbonate, bis(chlorophenyl) carbonate, m-cresyl carbonate, dimethyl carbonate, diethyl carbonate, dibutyl carbonate, dicyclohexyl carbonate and so on. Among them, diphenyl carbonate is particularly preferred in terms of reactivity and purity. As to the amount of the carbonic acid diester to be added, the amount to be charged can be determined assuming that the diol component and the dicarboxylic acid component are reacted in equimolar amounts, and the remainder is reacted with the carbonic acid diester. The carbonic acid diester is preferably used at a ratio of 0.60 to 1.50 moles relative to a 1 mole difference between the diol component and the dicarboxylic acid component, more preferably at a ratio of 0.80 to 1.40 moles, even more preferably at a ratio of 1.00 to 1.30 moles, still even more preferably at a ratio of 1.00 to 1.25 moles, and particularly preferably at a ratio of 1.00 to 1.20 moles. This molar ratio may be adjusted to thereby control the molecular weight of the resulting polyester carbonate resin.

Examples of a basic compound catalyst include an alkali metal compound, an alkaline earth metal compound, and a nitrogen-containing compound, etc.

Examples of an alkali metal compound available for use in the present invention include organic acid salts, inorganic salts, oxides, hydroxides, hydrides or alkoxides of alkali metals. Sodium bicarbonate and sodium carbonate are preferred in terms of their catalytic effect, price, distribution amount and influence on the resin's hue, etc.

Examples of an alkaline earth metal compound include organic acid salts, inorganic salts, oxides, hydroxides, hydrides or alkoxides of alkaline earth metals, with calcium acetate monohydrate and magnesium acetate tetrahydrate being preferred.

Examples of a nitrogen-containing compound include quaternary ammonium hydroxides and salts and amines thereof.

As a transesterification catalyst, a salt of zinc, tin, zirconium or lead is preferred for use, and these salts may be used either alone or in combination. Moreover, such a transesterification catalyst may be used in combination with the alkali metal compound and/or the alkaline earth metal compound mentioned above.

Specific examples of a transesterification catalyst available for use include tris(2,4-pentanedionato)aluminum(III), diethyl (4-methylbenzyl)phosphonate, zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonate, zirconium oxyacetate, zirconium tetrabutoxide, lead(II) acetate, lead(IV) acetate, zirconium acetate, titanium tetrabutoxide and so on. Among them, preferred are zinc acetate, zirconium acetate, tris(2,4-pentanedionato)aluminum(III) and diethyl (4-methylbenzyl)phosphonate, and more preferred are tris(2,4-pentanedionato)aluminum(III) and diethyl (4-methylbenzyl)phosphonate.

In one embodiment of the present invention, aluminum or a compound thereof may also be used as a polymerization catalyst.

Aluminum or a compound thereof for use as a polymerization catalyst may have a certain level of catalytic activity by itself alone as a catalyst for polymerizing polyester carbonate by transesterification. Examples of such aluminum or a compound thereof include metal aluminum, an aluminum salt, an aluminum chelate compound, an organic aluminum compound, an inorganic aluminum compound and so on.

Examples of an aluminum salt include organic acid salts and inorganic acid salts of aluminum. Examples of organic acid salts of aluminum include carboxylic acid salts of aluminum, as specifically exemplified by aluminum formate, aluminum acetate, aluminum propionate, aluminum oxalate, aluminum acrylate, aluminum laurate, aluminum stearate, aluminum benzoate, aluminum trichloroacetate, aluminum lactate, aluminum citrate, and aluminum salicylate. Examples of inorganic acid salts of aluminum include aluminum chloride, aluminum hydroxide, aluminum hydroxychloride, aluminum carbonate, aluminum phosphate, and aluminum phosphonate.

Examples of an aluminum chelate compound include aluminum acetylacetonate, aluminum acetyl acetate, aluminum ethyl acetoacetate, and aluminum ethyl acetoacetate di-iso-propoxide.

Examples of an organic aluminum compound include aluminum alkoxides, as exemplified by trialkylaluminum, dialkylaluminum alkoxide, alkylaluminum dialkoxide, aluminum trialkoxide, and hydrolysates thereof. Specific examples include aluminum methoxide, aluminum ethoxide, aluminum n-propoxide, aluminum iso-propoxide, aluminum n-butoxide, aluminum t-butoxide and other aluminum alkoxides, trimethylaluminum, triethylaluminum, and hydrolysates thereof. Examples of an inorganic aluminum compound include aluminum oxide and so on.

In particular, preferred are carboxylic acid salts, inorganic acid salts and chelate compounds of aluminum. Among them, particularly preferred are aluminum acetate, aluminum chloride, aluminum hydroxide, aluminum hydroxychloride and aluminum acetylacetonate.

In one embodiment of the present invention, a phosphorus compound may also be used as a polymerization catalyst.

A phosphorus compound for use as a polymerization catalyst can improve the catalytic activity of aluminum or a compound thereof in the polymerization reaction of polyester carbonate. Without being bound by any theory, this is probably because a phosphorus compound can prevent aluminum or a compound thereof from losing its catalytic activity due to an alcohol or water present in the reaction system.

Examples of such a phosphorus compound include a phosphonic acid-based compound, a phosphinic acid-based compound, a phosphine oxide-based compound, a phosphonous acid-based compound, a phosphinous acid-based compound, and a phosphine-based compound. Among them, particularly preferred are a phosphonic acid-based compound, a phosphinic acid-based compound and a phosphine oxide-based compound, especially a phosphonic acid-based compound.

The phosphonic acid-based compound intended here refers to a compound having the following structure.

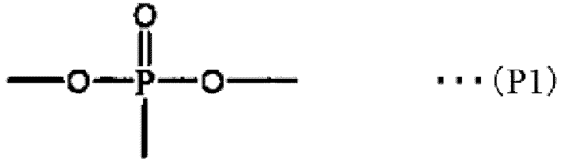

Examples of such a phosphonic acid-based compound include dimethyl methylphosphonate, diethyl methylphosphonate, dihexyl methylphosphonate, dioctyl methylphosphonate, diphenyl methylphosphonate, dimethyl phenylphosphonate, diethyl phenylphosphonate, dihexyl phenylphosphonate, dioctyl phenylphosphonate, diphenyl phenylphosphonate, dimethyl benzylphosphonate, diethyl benzylphosphonate, dihexyl benzylphosphonate, dioctyl benzylphosphonate, diphenyl benzylphosphonate, dimethyl p-methylbenzylphosphonate, diethyl p-methylbenzylphosphonate, dihexyl p-methylbenzylphosphonate, dioctyl p-methylbenzylphosphonate, diphenyl p-methylbenzylphosphonate, dimethyl 3,5-di-tert-butyl-4-hydroxybenzylphosphonate, diethyl 3,5-di-tert-butyl-4-hydroxybenzylphosphonate, dihexyl 3,5-di-tert-butyl-4-hydroxybenzylphosphonate, dioctyl 3,5-di-tert-butyl-4-hydroxybenzylphosphonate, diphenyl 3,5-di-tert-butyl-4-hydroxybenzylphosphonate and so on.

The phosphinic acid-based compound intended here refers to a compound having the following structure.

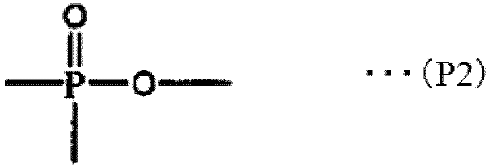

Examples of such a phosphinic acid-based compound include diphenylphosphinic acid, methyl diphenylphosphinate, phenyl diphenylphosphinate, phenylphosphinic acid, methyl phenylphosphinate, phenyl phenylphosphinate and so on.

The phosphine oxide-based compound intended here refers to a compound having the following structure.

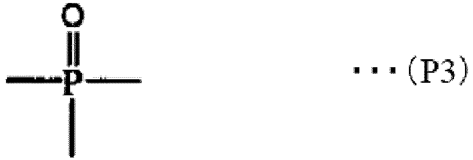

Examples of such a phosphine oxide-based compound include diphenylphosphine oxide, methyldiphenylphosphine oxide, triphenylphosphine oxide and so on.

The phosphonous acid-based compound intended here refers to a compound having the following structure.

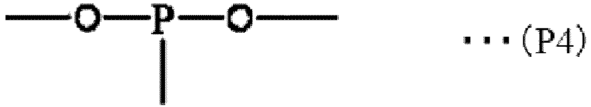

Examples of such a phosphonous acid-based compound include dimethyl phosphonite, diethyl phosphonite, dipropyl phosphonite, dibutyl phosphonite, diphenyl phosphonite and so on.

The phosphinous acid-based compound intended here refers to a compound having the following structure.

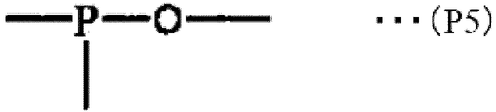

Examples of such a phosphonous acid-based compound include hydroxyphosphine, methyl dibutylphosphinite, propyl diphenylphosphinite, methoxydiphenylphosphine, ethoxydiphenylphosphine and so on.

The phosphine-based compound intended here refers to a compound having the following structure.

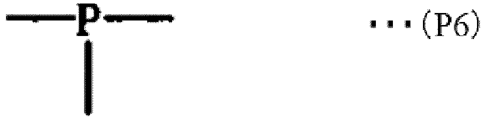

Examples of such a phosphine-based compound include trimethylphosphine, triethylphosphine, methyldibutylphosphine, phenylisopropylphosphine and so on.

Among phosphorus compounds as listed above, particularly preferred are phosphorus compounds having an aromatic ring, especially phosphonic acid-based compounds having an aromatic ring structure.

Phosphorus compounds may also be compounds represented by the following general formulae (P7) to (P9):

P(=O)R^{o}(OR^{p})(OR^{q}) ... (P7)

P(=O)R^{o}R^{r}(OR^{p}) ... (P8)

P(=O)R^{o}R^{s}R^{t} ... (P9)

(in formulae (P7) to (P9), R^{o}, R^{r}, R^{s} and R^{t} each independently represent a hydrogen atom, or a hydrocarbon group containing 1 to 50 or 1 to 20 carbon atoms which may contain a hydroxyl group, a halogen group, an alkoxyl group or an amino group and which may have a cycloaliphatic structure or an aromatic ring structure; and R^{p} and R^{q} each independently represent a hydrogen atom, or a hydrocarbon group containing 1 to 10 or 1 to 5 carbon atoms).

In the above formulae, R^{o}, R^{r}, R^{s} and/or R^{t} preferably has an aromatic ring, especially a benzyl group. Likewise, R^{p} and R^{q} are each preferably a hydrogen atom or a hydrocarbon group containing 1 to 3 carbon atoms.

These catalysts may be used such that the metal component in the catalyst accounts for preferably 0.1 to 10 ppm, more preferably 0.1 to 7.0 ppm, even more preferably 0.1 to 5.0 ppm, still even more preferably 0.1 to 3.0 ppm, and particularly preferably 0.1 to 1.0 ppm, relative to the theoretically generated amount of resin.

Melt polycondensation techniques are intended to cause melt polycondensation through transesterification reaction using the above starting materials and catalyst(s) under heating and under normal or reduced pressure while removing by-products.

In more detail, the reaction is conducted at a temperature of 120°C to 260°C, preferably 180°C to 260°C, for 0.1 to 5 hours, preferably 0.5 to 3 hours. Then, the reaction temperature is elevated while increasing the degree of reduced pressure in the reaction system to cause reaction between the diol compound and the carbonic acid diester, and finally polycondensation reaction is conducted under reduced pressure of 1 mmHg or less at a temperature of 200°C to 350°C for 0.05 to 2 hours. Such a reaction may be conducted in a continuous fashion or in a batch fashion. A reaction apparatus for use in the above reaction may be a vertical reactor equipped with an anchor-type impeller, a Maxblend impeller, a helical ribbon-type impeller, etc., or may be a horizontal reactor equipped with a paddle impeller, a grid impeller, a spectacle impeller, etc., or may be an extruder-type reactor equipped with a screw. Alternatively, in consideration of the viscosity of the resulting polymerization product, these reactors may be combined as appropriate and preferably used as a reaction apparatus for this purpose.

In a production method for the polyester carbonate resin according to the preferred aspect of the present invention, after completion of the polymerization reaction, the catalyst(s) may be removed or deactivated in order to maintain heat stability and hydrolysis stability. In general, catalyst deactivation by addition of known acidic substances is preferred for this purpose. These substances preferred for use are specifically exemplified by esters (e.g., butyl benzoate), aromatic sulfonic acids (e.g., p-toluenesulfonic acid), aromatic sulfonic acid esters (e.g., butyl p-toluenesulfonate, hexyl p-toluenesulfonate), phosphoric acids (e.g., phosphorous acid, phosphoric acid, phosphonic acid), phosphite esters (e.g., triphenyl phosphite, monophenyl phosphite, diphenyl phosphite, diethyl phosphite, di-n-propyl phosphite, di-n-butyl phosphite, di-n-hexyl phosphite, dioctyl phosphite, monooctyl phosphite), phosphate esters (e.g., triphenyl phosphate, diphenyl phosphate, monophenyl phosphate, dibutyl phosphate, dioctyl phosphate, monooctyl phosphate), phosphonic acids (e.g., diphenylphosphonic acid, dioctylphosphonic acid, dibutylphosphonic acid), phosphonic acid esters (e.g., diethyl phenylphosphonate), phosphines (e.g., triphenylphosphine, bis(diphenylphosphino)ethane), boric acids (e.g., boric acid, phenylboric acid), aromatic sulfonic acid salts (e.g., tetrabutylphosphonium dodecylbenzenesulfonate), organic halides (e.g., stearoyl chloride, benzoyl chloride, p-toluenesulfonyl chloride), alkyl sulfates (e.g., dimethyl sulfate), organic halides (e.g., benzyl chloride), etc. In terms of the deactivation effect and the resin's hue and stability, aromatic sulfonic acid salts (e.g., tetrabutylphosphonium dodecylbenzenesulfonate) are preferred for use. Moreover, these deactivators are used in 0.01- to 50-fold molar excess, preferably 0.3- to 20-fold molar excess, relative to the catalyst amount. If the deactivator amount is less than 0.01-fold molar excess relative to the catalyst amount, it is not preferred because the deactivation effect is not high enough. Likewise, if the deactivator amount is greater than 50-fold molar excess relative to the catalyst amount, it is not preferred because heat resistance is reduced, so that coloration is more likely to occur in the resulting molded articles.

The catalyst deactivation may be followed by a step in which low-boiling compounds in the resulting polymer are removed by devolatilization at a pressure of 0.1 to 1 mmHg and at a temperature of 200°C to 350°C. For this purpose, a horizontal evaporator equipped with an impeller excellent in surface renewal ability (e.g., a paddle impeller, a grid impeller, a spectacle impeller) or a thin film evaporator is preferred for use.

The polyester carbonate resin according to the preferred aspect of the present invention is desired to be extremely low in the content of contaminants, which is preferably accomplished by filtration of the molten starting materials and/or filtration of the catalyst solution. The mesh size of a filter is preferably 5 µm or less, and more preferably 1 µm or less. Further, the resulting resin is preferably filtered through a polymer filter. The mesh size of the polymer filter is preferably 100 µm or less, and more preferably 30 µm or less. Moreover, the step of collecting resin pellets should be conducted, of course, in a low-dust environment, which is preferably of class 1000 or below, and more preferably of class 100 or below.

### <Production method for a polyester resin>

A polyester resin according to a preferred aspect of the present invention may be produced using the crystal of the dicarboxylic acid diester constituting the above constituent unit (A) and a diol compound by conventionally known techniques for polyester production. Examples include melt polymerization techniques (e.g., transesterification, direct esterification) or solution polymerization techniques, etc. Examples of the above diol compound include an aliphatic dihydroxy compound and an aromatic dihydroxy compound as described above, but preferably include the monomer represented by the above general formula (b) and/or the monomer represented by the above general formula (c).

In the production of the polyester resin according to the preferred aspect of the present invention, it is possible to use a transesterification catalyst, an esterification catalyst, a polycondensation catalyst and so on which are commonly used for polyester resin production. These catalysts are not limited in any way, but examples include compounds (e.g., fatty acid salt, carbonate salt, phosphate salt, hydroxide, chloride, oxide, alkoxide) of zinc, lead, cerium, cadmium, manganese, cobalt, lithium, sodium, potassium, calcium, nickel, magnesium, vanadium, aluminum, titanium, antimony, germanium, tin and other metals, as well as metal magnesium, etc. These candidates may be used either alone or in combination. For use as a catalyst, preferred is a compound of manganese, cobalt, zinc, titanium, calcium, antimony, germanium or tin among those mentioned above, and more preferred is a compound of manganese, titanium, antimony, germanium or tin. The amount of these catalysts to be used is not limited in any way, but it is preferably 1 to 1000 ppm, more preferably 3 to 750 ppm, even more preferably 5 to 500 ppm, calculated as a metal component relative to the starting materials of the polyester resin.

The reaction temperature in the above polymerization reaction will vary depending on the type of catalyst(s) and the amount thereof used, etc., but it is usually selected from the range of 150°C to 300°C, and is preferably 180°C to 280°C in consideration of the reaction rate and coloration in the resulting resin. The pressure within the reaction chamber is preferably adjusted from an air atmosphere to finally 1 kPa or less, and more preferably finally 0.5 kPa or less.

For the above polymerization reaction, a phosphorus compound may be added if desired. Examples of such a phosphorus compound include, but are not limited to, phosphoric acid, phosphorous acid, phosphate esters, phosphite esters and so on. Examples of phosphate esters include, but are not limited to, methyl phosphate, ethyl phosphate, butyl phosphate, phenyl phosphate, dimethyl phosphate, diethyl phosphate, dibutyl phosphate, diphenyl phosphate, trimethyl phosphate, triethyl phosphate, tributyl phosphate, triphenyl phosphate and so on. Examples of phosphite esters include, but are not limited to, methyl phosphite, ethyl phosphite, butyl phosphite, phenyl phosphite, dimethyl phosphite, diethyl phosphite, dibutyl phosphite, diphenyl phosphite, trimethyl phosphite, triethyl phosphite, tributyl phosphite, triphenyl phosphite and so on. These phosphorus compounds may be used either alone or in combination. The concentration of phosphorus atoms in the polyester resin of the present invention is preferably 1 to 500 ppm, more preferably 5 to 400 ppm, and even more preferably 10 to 200 ppm.

Moreover, in the production of the polyester resin according to the preferred aspect of the present invention, it is possible to use an etherification inhibitor, various types of stabilizers (e.g., a heat stabilizer, a light stabilizer), a polymerization regulator, etc.

### <Physical properties of the thermoplastic resin>

### (1) Weight average molecular weight (Mw) when calculated as polystyrene

In one embodiment of the present invention, the thermoplastic resin has a weight average molecular weight of preferably 10,000 to 100,000, more preferably 10,000 to 80,000, and particularly preferably 10,000 to 60,000, when calculated as polystyrene. The Mw may be measured by the procedure shown in the Example section described later.

### (2) YI value (yellowness index)

In one embodiment of the present invention, the thermoplastic resin has a YI value of preferably 0.1 to 14, more preferably 0.1 to 10, even more preferably 0.1 to 7, and particularly preferably 0.3 to 5. The YI value may be measured by the procedure shown in the Example section described later.

### (3) Refractive index (nD)

In one embodiment of the present invention, the thermoplastic resin is characterized by having a high refractive index, and its refractive index is preferably 1.600 to 1.700, more preferably 1.626 to 1.700, and particularly preferably 1.630 to 1.650.

### (4) Abbe's number (v)

In one embodiment of the present invention, the thermoplastic resin has an Abbe's number of preferably 22.0 to 26.0, more preferably 23.0 to 26.0, and particularly preferably 23.0 to 24.7.

### (5) Glass transition temperature (Tg)

In one embodiment of the present invention, the thermoplastic resin is characterized by having high heat resistance, and its glass transition temperature (Tg) is preferably 70°C to 200°C, more preferably 100°C to 200°C, even more preferably 100°C to 150°C, still even more preferably 125°C to 150°C, still even more preferably 125°C to 145°C, and particularly preferably 125°C to 140°C.

### (6) Photoelastic modulus

In one embodiment of the present invention, the thermoplastic resin is characterized by having a low photoelastic modulus, and its photoelastic modulus is preferably 25 to 45, more preferably 25 to 38, and particularly preferably 30 to 38.

### < Thermoplastic resin composition >

Another embodiment of the present invention relates to a thermoplastic resin composition comprising the aforementioned thermoplastic resin and additives. The thermoplastic resin composition of the present embodiment may also comprise a resin other than the thermoplastic resin of the present invention comprising the aforementioned constituent unit (A), in a range in which such a resin does not impair the desired effects of the present embodiment. Such a resin is not particularly limited, and it may be, for example, at least one resin selected from the group consisting of a polycarbonate resin, a polyester resin, a polyester carbonate resin, a (meth)acrylic resin, a polyamide resin, a polystyrene resin, a cycloolefin resin, an acrylonitrile-butadienestyrene copolymer resin, a vinyl chloride resin, a polyphenylene ether resin, a polysulfone resin, a polyacetal resin, and a methyl methacrylate-styrene copolymer resin. Various types of known resins can be used as such resins, and one type of such resin alone can be added to, or a combination of two or more types of such resins can be added to the thermoplastic resin composition.

### [Antioxidant]

The thermoplastic resin composition preferably comprises an antioxidant as an additive described above.

As such an antioxidant, the thermoplastic resin composition preferably comprises at least one of a phenolic antioxidant and a phosphite-based antioxidant.

Examples of the phenolic antioxidant may include 1,3,5-tris(3,5-di-tert-butyl-4-hydroxyphenylmethyl)-2,4,6-trimethylbenzene, 1,3,5-tris(3,5-di-tert-butyl-4-hydroxybenzyl)-1,3,5-triazine-2,4,6(1H,3H,5H)-trione, 4,4',4"-(1-methylpropanyl-3-ylidene)tris(6-tert-butyl-m-cresol), 6,6'-di-tert-butyl-4,4'-butylidenedi-m-cresol, octadecyl 3-(3,5-di-tert-butyl-4-hydroxyphenyl)propionate, pentaerythritol-tetrakis[3-(3,5-di-tert-butyl-4-hydroxyphenyl)propionate], 3,9-bis{2-[3-(3-tert-butyl-4-hydroxy-5-methylphenyl)propionyloxy]-1,1-dimethylethyl}-2,4,8,10-tetraoxospiro[5.5]undecane, and pentaerythritol-tetrakis[3-(3,5-di-tert-butyl-4-hydroxyphenyl)propionate]. Among these, pentaerythritol-tetrakis[3-(3,5-di-tert-butyl-4-hydroxyphenyl)propionate] is preferable.

Examples of the phosphite-based antioxidant may include 2-ethylhexyl diphenyl phosphite, isodecyl diphenyl phosphite, triisodecyl phosphite, triphenyl phosphite, 3,9-bis(octadecyloxy)-2,4,8,10-tetraoxy-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2'-methylenebis(4,6-di-tert-butylphenyl)2-ethylhexyl phosphite, tris(2,4-ditert-butylphenyl) phosphite, tris(nonylphenyl) phosphite, tetra-C12-15-alkyl(propane-2,2-diylbis(4,1-phenylene)) bis(phosphite), and 3,9-bis(2,6-di-tert-butyl-4-methylphenoxy)-2,4,8,10-tetraoxa-3,9-diphosphaspiro[5.5]undecane. Among these, 3,9-bis(2,6-di-tert-butyl-4-methylphenoxy)-2,4,8,10-tetraoxa-3,9-diphosphaspiro[5.5]undecane is preferable.

As such antioxidants, the aforementioned compounds may be used alone as a single type, or may also be used as a mixture of two or more types.

The antioxidant is preferably comprised in the thermoplastic resin composition in an amount of 1 ppm by weight to 3000 ppm by weight, with respect to the total weight of the resin composition. The content of the antioxidant in the thermoplastic resin composition is more preferably 50 ppm by weight to 2500 ppm by weight, further preferably 100 ppm by weight to 2000 ppm by weight, particularly preferably 150 ppm by weight to 1500 ppm by weight, and further particularly preferably 200 ppm by weight to 1200 ppm by weight.

### [Release agent]

The thermoplastic resin composition preferably comprises a release agent as an additive described above.

Examples of the release agent may include ester compounds including glycerin fatty acid esters such as mono/diglyceride of glycerin fatty acid, glycol fatty acid esters such as propylene glycol fatty acid ester and sorbitan fatty acid ester, higher alcohol fatty acid esters, full esters of aliphatic polyhydric alcohol and aliphatic carboxy acid, and monofatty acid esters. When an ester of aliphatic polyhydric alcohol and aliphatic carboxy acid is used as a release agent, any of a monoester, a full ester, and the like can be adopted. For example, those other than full esters, such as a monoester, may be used.

Specific examples of the release agent may include the following substances: namely,
sorbitan fatty acid esters, such as sorbitan stearate, sorbitan laurate, sorbitan oleate, sorbitan trioleate, sorbitan tribehenate, sorbitan stearate, sorbitan tristearate, and sorbitan caprylate;
propylene glycol fatty acid esters, such as propylene glycol monostearate, propylene glycol monooleate, propylene glycol monobehenate, propylene glycol monolaurate, and propylene glycol monopalmitate;
higher alcohol fatty acid esters, such as stearyl stearate;
glycerin fatty acid ester monoglycerides, which include: monoglycerides including glycerin monostearate, glycerin monohydroxystearate such as glycerin mono-12-hydroxystearate, glycerin monooleate, glycerin monobehenate, glycerin monocaprylate, glycerin monocaprate and glycerin monolaurate; and mono/diglycerides including glycerin mono/distearate, glycerin mono/distearate, glycerin mono/dibehenate, glycerin mono/dioleate;
acetylated monoglycerides of glycerin fatty acid esters, such as glycerin diacetomonolaurate;
organic acid monoglycerides of glycerin fatty acid esters, such as citric acid fatty acid monoglyceride, succinic acid fatty acid monoglyceride, and diacetyl tartaric acid fatty acid monoglyceride; and
polyglycerin fatty acid esters, such as diglycerin stearate, diglycerin laurate, diglycerin oleate, diglycerin monostearate, diglycerin monolaurate, diglycerin monomyristate, diglycerin monooleate, tetraglycerin stearate, decaglycerin laurate, decaglycerin oleate, and polyglycerin polyricinoleate.

The release agent is preferably comprised in the thermoplastic resin composition in an amount of 1 ppm by weight to 5000 ppm by weight, with respect to the total weight of the resin composition. The content of the release agent in the thermoplastic resin composition is more preferably 50 ppm by weight to 4000 ppm by weight, further preferably 100 ppm by weight to 3500 ppm by weight, particularly preferably 500 ppm by weight to 13000 ppm by weight, and further particularly preferably 1000 ppm by weight to 2500 ppm by weight.

### [Other additives]

Additives other than the aforementioned antioxidant and release agent may also be added to the thermoplastic resin composition. Examples of the additives that may be comprised in the thermoplastic resin composition may include a compounding agent, a catalyst inactivator, a thermal stabilizer, a plasticizer, a filler, an ultraviolet absorber, a rust inhibitor, a dispersant, an antifoaming agent, a leveling agent, a flame retardant, a lubricant, a dye, a pigment, a bluing agent, a nucleating agent, and a clearing agent.

The content of additives other than the antioxidant and the release agent in the thermoplastic resin composition is preferably 10 ppm by weight to 5.0% by weight, more preferably 100 ppm by weight to 2.0% by weight, and further preferably 1000 ppm by weight to 1.0% by weight, but is not limited thereto.

The aforementioned additives are likely to adversely affect transmittance. Thus, it is preferable not to add such additives excessively, and more preferably, the total additive amount is, for example, within the aforementioned range.

### < Optical member >

The thermoplastic resin or the thermoplastic resin composition of the present invention (hereinafter simply abbreviated as a "resin composition") can be preferably used in an optical member. In one embodiment of the present invention, an optical member comprising the resin composition of the present invention is provided. In one embodiment of the present invention, the optical member may include, but is not limited to, an optical disk, a transparent conductive substrate, an optical card, a sheet, a film, an optical fiber, a lens, a prism, an optical film, a substrate, an optical filter, a hard coat film, and the like. The resin composition of the present invention has high fluidity, and can be molded according to a cast method. Hence, the present resin composition is preferably used, in particular, in production of a thin optical member. In a preferred embodiment of the present invention, the optical member produced using the resin composition of the present invention may be an optical lens. In another preferred embodiment of the present invention, the optical member produced using the resin composition of the present invention may be an optical film.

When an optical member comprising the resin composition of the present invention is produced according to injection molding, the optical member is preferably molded under conditions of a cylinder temperature of 260°C to 350°C and a mold temperature of 90°C to 170°C. The optical member is more preferably molded under conditions of a cylinder temperature of 270°C to 320°C and a mold temperature of 100°C to 160°C. When the cylinder temperature is higher than 350°C, the resin composition is decomposed and colored. On the other hand, when the cylinder temperature is lower than 260°C, the melt viscosity becomes high, and it easily becomes difficult to mold the optical member. Moreover, when the mold temperature is higher than 170°C, it easily becomes difficult to remove a molded piece consisting of the resin composition from a mold. On the other hand, when the mold temperature is lower than 90°C, the resin is hardened too quickly in a mold upon the molding thereof, and it becomes difficult to control the shape of a molded piece, or it easily becomes difficult to sufficiently transcribe a vehicle placed in a mold.

### < Optical lens >

In one embodiment of the present invention, the resin composition can be preferably used in an optical lens. Since the optical lens produced using the resin composition of the present invention has a high refractive index and is excellent in terms of heat resistance, it can be used in fields in which expensive glass lenses having a high refractive index have been conventionally used, such as telescopes, binoculars and TV projectors, and thus, the optical lens produced using the present resin composition is extremely useful.

For instance, regarding a lens used for smart phones, a lens molded from a thermoplastic resin comprising the constituent unit (A) is overlapped with a lens molded from a resin comprising the constituent unit represented by any one of the formulae (II-1) to (II-4) or a resin comprising a constituent unit derived from a monomer represented by any one of the following formulae, so that the lenses can be used as a lens unit: 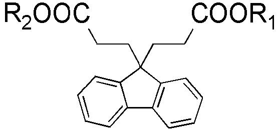 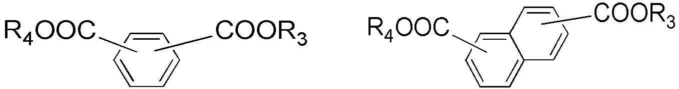 wherein, in the above formulae, R₁ and R₂ each independently represent a hydrogen atom, a methyl group or an ethyl group, and R₃ and R₄ each independently represent a hydrogen atom, a methyl group, an ethyl group, or alkylene glycol containing 2 to 5 carbon atom.

A lens molded from a resin containing a structural unit derived from any of the monomers of the above formula can be used as a lens unit by being superimposed on each other.

The optical lens of the present invention is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens.

Moreover, since the optical lens of the present invention has high molding fluidity, the present optical lens is particularly useful as a material of a thin and small optical lens having a complicated shape. Regarding the specific size of a lens, the thickness of the central portion is preferably 0.05 to 3.0 mm, more preferably 0.05 to 2.0 mm, and further preferably 0.1 to 2.0 mm. In addition, the diameter is preferably 1.0 mm to 20.0 mm, more preferably 1.0 to 10.0 mm, and further preferably , 3.0 to 10.0 mm. Further, regarding the shape thereof, the optical lens of the present invention is preferably a meniscus lens, in which one surface is a convex, and the other surface is a concave.

The optical lens of the present invention is molded according to any given method such as die molding, cutting, polishing, laser machining, electrical discharge machining, or etching. Among these methods, die molding is more preferable in terms of production costs.

### < Optical film >

In one embodiment of the present invention, the resin composition can be preferably used in optical films. In particular, since the optical film produced using the polycarbonate resin of the present invention is excellent in terms of transparency and heat resistance, it can be preferably used for films for use in liquid crystal substrates, optical memory cards, etc.

In order to avoid the mixing of foreign matters into the optical lens, the molding environment must be naturally a low-dust environment, and the class is preferably 6 or less, and more preferably 5 or less.

### Examples

The working examples of the present invention are shown below together with comparative examples to describe the details of the invention, although the present invention is not limited to these working examples. The physical property data of the resulting resins were measured based on the following procedures and apparatuses.

### 1) Solution YI (yellowness index)

The resulting resin was dissolved in dichloromethane to prepare a 2% by mass resin solution. The resin solution was filtered through a 1 µm filter, and the resulting filtrate was used as a test sample. The test sample was poured into a cell with an optical path length of 50 mm and measured for its solution YI with a spectral hazemeter.

Measuring instrument: "SH 7000" (Nippon Denshoku Industries Co., Ltd., Japan)

### 2) Weight average molecular weight (Mw)

The weight average molecular weight (Mw) of the resulting resin was measured by gel permeation chromatography (GPC) techniques and calculated as standard polystyrene. The apparatus, column and measurement conditions used are as shown below.
GPC apparatus: HLC-8420GPC (Tosoh Corporation, Japan)
Column: TSKgel SuperHM-M × 3 (Tosoh Corporation, Japan)
   TSKgel guardcolumn SuperH-H × 1 (Tosoh Corporation, Japan)
   TSKgel SuperH-RC × 1 (Tosoh Corporation, Japan)
Detector: an RI detector
Standard polystyrene: Standard polystyrene kit PStQuick C (Tosoh Corporation, Japan)
Sample solution: a 0.2% by mass solution in tetrahydrofuran
Eluent: tetrahydrofuran
Eluent flow rate: 0.6 mL/min
Column temperature: 40°C

### <Synthesis Example 1>

A glass reactor equipped with a stirrer, a heater-cooler unit and a thermometer was charged with 1,1'-bi-2-naphthol (50 g, 0.18 mol), acetonitrile (150 g), potassium carbonate (55.5 g, 0.40 mol) and potassium iodide (5 g). The internal temperature was elevated to 80°C, and the mixture was stirred at the same temperature for 1 hour. Then, ethyl chloroacetate (59.9 g, 0.49 mol) was added dropwise while maintaining the temperature of the reaction solution at 70°C to 80°C. After stirring for 24 hours at the same temperature, ion exchanged water (125 g) was added dropwise to the reaction solution to dissolve inorganic salts, and the aqueous layer was then separated. Then, the resulting organic layer was concentrated to distill off water and a part of acetonitrile, and the organic layer was then charged with toluene (150 g) and washed with water. Then, the resulting organic layer was concentrated to distill off water and a part of toluene, thereby obtaining a toluene solution of 2,2'-bis(ethoxycarbonylmethoxy)-1,1'-binaphthyl (111.4 g; containing 25.1% by weight of toluene).

The above toluene solution was charged at 25°C with diphenyl carbonate (187 g, 0.87 mol), and the internal temperature was elevated to 80°C to dissolve diphenyl carbonate. The toluene solution was then charged with tetraisopropyl orthotitanate (1.3 g, 0.0046 mol). After reducing the internal pressure to 1.3 kPa, the internal temperature was elevated to 150°C and the reaction was conducted at the same temperature for 8 hours while distilling off toluene and by-products. Then, crystals were precipitated at the time point when the internal temperature was cooled to 100°C. For this reason, the reactor was charged with toluene (150 g) and the internal temperature was elevated to 110°C to dissolve again the precipitated crystals. Then, the internal temperature was cooled to 85°C to precipitate crystals without adding seed crystals, followed by cooling the internal temperature to 5°C at a cooling rate of 10°C/hour. Subsequently, the precipitate crystals were collected by filtration at the same temperature, and the resulting crystals were dried under reduced pressure of 1.3 kPa for 11 hours while heating at a water bath temperature of 90°C, thereby obtaining a compound represented by the following formula (1) (73.2 g) as a crystal (yield: 76%).

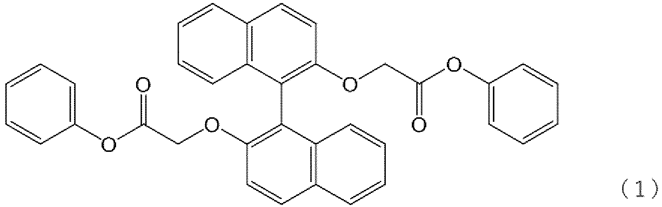

The resulting crystal of the compound represented by the above formula (1) (hereinafter also referred to as "BINOL-DP") was found to have an HPLC purity of 98.7% when measured in the following manner.

### <HPLC measurement>

Apparatus: LC-2030 (Shimadzu Corporation, Japan)
Column: XBridge Phenyl (3.5 µm, 4.6 mmϕ × 150 mm)
Column temperature: 40°C
Detection wavelength: UV 254 nm
Mobile phase: phase A = 0.1% formic acid-containing ultrapure water, phase B = 0.1% formic acid in acetonitrile (it should be noted that analysis was conducted while varying the concentration of phase B as shown below)
   Phase B concentration: 40% (5 min hold) → 30 min → 70% (10 min hold) → 5 min → 100% (10 min)
Mobile phase flow rate: 1.0 ml/min
Sample injection volume: 5 µL

The resulting crystal of the compound represented by the above formula (1) was found to have a maximum melting endothermic temperature of 179.1°C when measured by differential scanning calorimetry (DSC) according to the following procedure. Moreover, the resulting crystal of the compound represented by the above formula (1) was found to have a thermal decomposition temperature (Td5) of 330.4°C when measured with a differential thermobalance according to the following procedure. Further, the resulting crystal of the compound represented by the above formula (1) was measured by powder X-ray diffractometry in the following manner, and the obtained main X-ray diffraction peaks (whose relative intensity is above 5%) are shown in Table 1 below.

### <Differential scanning calorimetry (DSC)>

5 mg of the crystal of the compound represented by the above formula (1) was precisely weighed on an aluminum pan, and measured with a differential scanning calorimeter (DSC7020, SII NanoTechnology Inc., Japan) under the following operation conditions using aluminum oxide as a control.

### (Operation conditions)

Rate of temperature rise: 10°C/min
Measuring range: 30°C to 300°C
Atmosphere: open, nitrogen 40 ml/min

### <Measurement of thermal decomposition temperature (Td5)>

Using a differential thermobalance "Thermo plus EVO2" (Rigaku Corporation, Japan), 5 mg of the crystal was precisely weighed on an aluminum pan, and the other aluminum pan was set in an empty state. After the weight value was set to zero, the temperature was elevated to 450°C at a rate of temperature rise of 10°C/min in a nitrogen atmosphere, and the thermal decomposition temperature was measured. It should be noted that the thermal decomposition temperature was defined to be the temperature at which 5% weight loss occurred.

### <Powder X-ray diffractometry>

150 mg of the crystal of the compound represented by the above formula (1) was filled into a sample filling section in a glass test plate, and measured with a powder X-ray diffractometer (X'PertPRO, Spectris Co., Ltd.) under the following conditions.
X-ray source: CuKα
Power: 1.8 kW (45 kV-40 mA)
Measuring range: 2θ = 5° to 70°
Scanning rate: 2θ = 2°/min
Slit: DS = 1°, mask = 15 mm, RS = variable (0.1 mm ~)

**[Table 1]**

| Diffraction angle (°, 2θ) | Interlattice distance (Å, d value) | Relative intensity (%) | Diffraction angle (°, 2θ) | Interlattice distance (Å, d value) | Relative intensity (%) |
|---|---|---|---|---|---|
| 7.62 | 11.60 | 100.00 | 19.67 | 4.51 | 19.60 |
| 8.73 | 10.12 | 56.72 | 20.50 | 4.33 | 6.88 |
| 10.34 | 8.55 | 8.27 | 21.94 | 4.05 | 35.21 |
| 14.11 | 6.27 | 12.12 | 22.84 | 3.89 | 14.26 |
| 16.07 | 5.51 | 12.28 | 23.85 | 3.73 | 7.27 |
| 18.02 | 4.92 | 37.89 | 25.00 | 3.56 | 13.14 |
| 19.19 | 4.62 | 20.61 | 26.09 | 3.41 | 5.44 |

Further, the resulting crystal of the compound represented by the above formula (1) was measured by NMR and LC-MS in the following manner. The spectral data of ¹H-NMR, ¹³C-NMR and LC-MS are shown under their respective measurement procedures.

### <NMR measurement>

For ¹H-NMR and ¹³C-NMR, tetramethylsilane was used as an internal standard, and deuterochloroform (CDCl₃) was used as a solvent, and data were recorded with a JEOL-ESC400 spectrometer.

### [¹H-NMR (CDCl₃)]

δ (ppm) = 4.78 (4H, s), 6.92 (4H, d), 7.17-7.22 (6H, m), 7.29-7.34 (6H, m), 7.44 (2H, d), 7.88 (2H, d), 7.99 (2H, d).

### [¹³C-NMR (CDCl₃)]

δ (ppm) = 67.08, 115.44, 120.46, 121.23, 124.30, 125.66, 126.01, 126.68, 127.96, 129.39, 129.85, 129.93, 133.99, 150.06, 153.57, 167.84.

### <LC-MS measurement>

Apparatus: Xevo G2 Q-Tof (Waters)
Column: L-Column2 ODS (2 µm, 2.1 mmϕ × 100 mm)
Column temperature: 40°C
Detection wavelength: UV 200 to 500 nm
Mobile phase: phase A = 10 mM ammonium acetate in methanol and water, phase B = methanol (it should be noted that analysis was conducted while varying the concentration of phase B as shown below)
   Phase B concentration: 60% (1 min hold) → 7 min → 90% (2 min hold) Mobile phase flow rate: 0.35 ml/min
Detection method: Q-Tof
Ionization method: ESI(+) method
Ion Source: voltage(+) 2.0 kV, temperature 120°C
Sampling Cone: voltage 10 V, gas flow 50 L/h
Desolvation Gas: temperature 400°C, gas flow 1000 L/h

### [LC-MS]

### Mass spectrometry data ([M+NH₄]⁺): 572.20650

(The theoretical molecular weight of the compound represented by the above formula (1) (ESI+; [C₃₆H₂₆O₆+NH₄]⁺): 572.20676).

### (Example 1)

As starting materials, the crystal of BINOL-DP synthesized in Synthesis Example 1 (167.63 g, 0.302 mol), BNEF represented by the following structural formula (128.73 g, 0.239 mol), BNE represented by the following structural formula (60.53 g, 0.162 mol), DPC (diphenyl carbonate; 21.50 g, 0.100 mol) and calcium acetate monohydrate (0.7 mg, 4.0 × 10⁻⁶ mol) were introduced into a 500 mL reactor equipped with a stirrer and a distillator, and the starting materials were dissolved while stirring for 10 minutes in a nitrogen atmosphere under 101.3 kpa at a heating medium temperature of 200°C. Then, the heating medium temperature was elevated to 220°C over 30 minutes, and the starting materials were reacted for 60 minutes at 101.3 kpa. Then, the pressure was reduced from 101.3 kpa to 13.3 kpa over 90 minutes, and maintained at 13.3 kpa for 30 minutes to remove the generated phenol from the reaction system. Then, the pressure was reduced to 0.1 kpa or less while elevating the heating medium temperature to 250°C over 30 minutes to remove the generated phenol from the reaction system. Then, the pressure was maintained at 0.1 kpa or less for 30 minutes, thereby obtaining a polyester carbonate resin. The physical properties of the resulting resin are shown in Table 2.

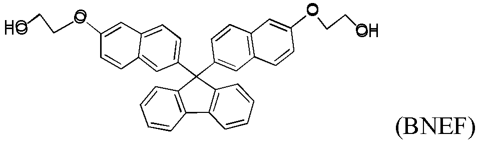

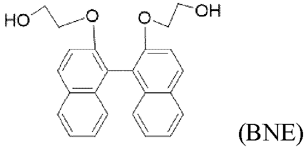

### (Examples 2 to 4)

The same procedures as used in Example 1 were repeated to obtain a polyester carbonate resin, except that the catalyst amount was changed as indicated in Table 2. The physical properties of the resulting resins are shown in Table 2.

### (Examples 5 and 6)

The same procedures as used in Example 1 were repeated to obtain a polyester carbonate resin, except that the catalyst species was changed as indicated in Table 2. The physical properties of the resulting resins are shown in Table 2.

### (Comparative Example 1)

The same procedures as used in Example 1 were repeated to obtain a polyester carbonate resin, except that the crystal of BINOL-DP (phenyl ester form) was replaced with BINOL-DC (carboxylic acid form) represented by the following structural formula. The physical properties of the resulting resin are shown in Table 2.

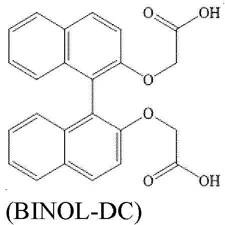

### (Comparative Example 2)

The same procedures as used in Example 1 were repeated to obtain a polyester carbonate resin, except that the crystal of BINOL-DP (phenyl ester form) was replaced with BINOL-DM (methyl ester form) represented by the following structural formula. The physical properties of the resulting resin are shown in Table 2.

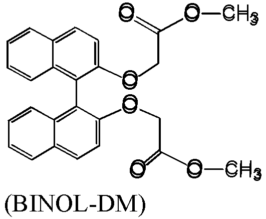

### (Comparative Example 3)

The same procedures as used in Comparative Example 2 were repeated to obtain a polyester carbonate resin, except that the catalyst amount was changed as indicated in Table 2. The physical properties of the resulting resin are shown in Table 2.

**[Table 2]**

| | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| Starting material | Carboxylic acid | BINOL-DP phenyl ester | 43 | 43 | 43 | 43 | 43 | 43 | 0 | 0 | 0 |
| | | BINOL-DC carboxylic acid | 0 | 0 | 0 | 0 | 0 | 0 | 43 | 0 | 0 |
| | | BINOL-DM methyl ester | 0 | 0 | 0 | 0 | 0 | 0 | 0 | 43 | 43 |
| | Diol | BNE | 23 | 23 | 23 | 23 | 23 | 23 | 23 | 23 | 23 |
| | | BNEF | 34 | 34 | 34 | 34 | 34 | 34 | 34 | 34 | 34 |
| | Molar ratio of diphenyl carbonate (DPC) *1 | | 1.02 | 1.02 | 1.02 | 1.02 | 1.02 | 1.02 | 1.02 | 1.02 | 1.02 |
| | Catalyst species | | Calcium acetate monohydrate | Calcium acetate monohydrate | Calcium acetate monohydrate | Calcium acetate monohydrate | Sodium bicarbonate | Magnesium acetate tetrahydrate | Calcium acetate monohydrate | Calcium acetate monohydrate | Calcium acetate monohydrate |
| | Catalyst concentration | | 0.5 | 1.5 | 2.8 | 7.0 | 0.5 | 0.5 | 0.5 | 0.5 | 15.0 |
| | = catalyst concentration [ppm] relative to theoretically obtainable amount of resin *2 | | | | | | | | | | |
| Physical properties | Molecular weight (Mw) | | 40,000 | 45,000 | 48,000 | 38,000 | 40,000 | 40,000 | 8,000 | 8,000 | 38,000 |
| | Resin's hue | | 1 | 2 | 2 | 5 | 2 | 2 | 8 | 8 | 15 |

| | | | | | | | | | | | |
|---|---|---|---|---|---|---|---|---|---|---|---|
| *1 Molar ratio of DPC = moles of DPC / (moles of diols - moles of carboxylic acid) *2 Theoretically obtainable amount of resin = (total weight of starting materials) - (total weight of water and hydroxy alcohol theoretically distilled off) | | | | | | | | | | | |

## Claims

1. A method for producing a thermoplastic resin having a constituent unit (A) represented by the following formula, said method comprising:
the step of reacting a crystal of a dicarboxylic acid diester represented by the following formula (a) with a diol compound, wherein the crystal of the dicarboxylic acid diester satisfies at least one of the requirements: (i) having a maximum melting endothermic temperature of 177°C to 181°C as measured by differential scanning calorimetric analysis; and (ii) having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation 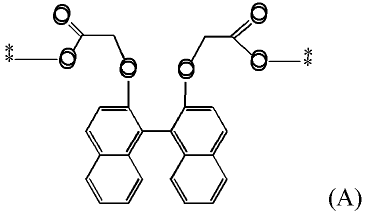 (in formula (A), an asterisk (*) represents a bonding site)

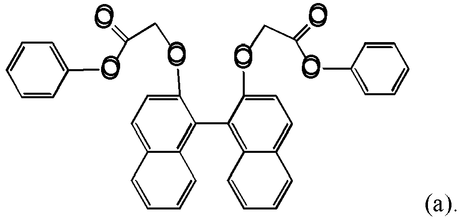

2. The production method according to claim 1, wherein the crystal of the dicarboxylic acid diester satisfies both the requirements: (i) having a maximum melting endothermic temperature of 177°C to 181°C as measured by differential scanning calorimetric analysis; and (ii) having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation.

3. The production method according to claim 1 or 2, wherein the thermoplastic resin is a polyester resin or a polyester carbonate resin.

4. The production method according to any one of claims 1 to 3, wherein the thermoplastic resin comprises a constituent unit (B) derived from a monomer represented by the following general formula (b) and/or a constituent unit (C) derived from a monomer represented by the following general formula (c) 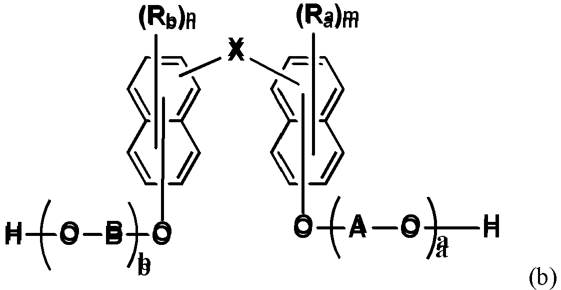 (in general formula (b),
Rₐ and R_{b} are each independently selected from the group consisting of a hydrogen atom, a halogen atom, an optionally substituted alkyl group containing 1 to 20 carbon atoms, an optionally substituted alkoxyl group containing 1 to 20 carbon atoms, an optionally substituted cycloalkyl group containing 5 to 20 carbon atoms, an optionally substituted cycloalkoxyl group containing 5 to 20 carbon atoms, an optionally substituted aryl group containing 6 to 20 carbon atoms, an optionally substituted heteroaryl group containing 6 to 20 carbon atoms which contains one or more heterocyclic ring atoms selected from O, N and S, an optionally substituted aryloxy group containing 6 to 20 carbon atoms, and -C≡C-Rₕ,
Rₕ represents an optionally substituted aryl group containing 6 to 20 carbon atoms, or an optionally substituted heteroaryl group containing 6 to 20 carbon atoms which contains one or more heterocyclic ring atoms selected from O, N and S,
X is a single bond or represents an optionally substituted fluorene group,
A and B each independently represent an optionally substituted alkylene group containing 1 to 5 carbon atoms,
m and n each independently represent an integer of 0 to 6, and
a and b each independently represent an integer of 0 to 10) 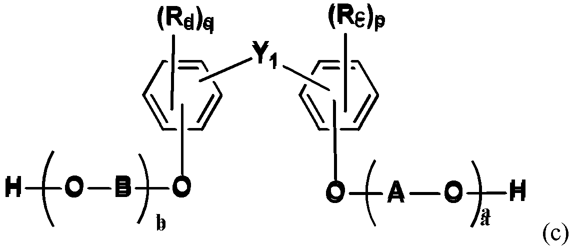 (in general formula (c),
R_{c} and R_{d} are each independently selected from the group consisting of a hydrogen atom, a halogen atom, an optionally substituted alkyl group containing 1 to 20 carbon atoms, an optionally substituted alkoxyl group containing 1 to 20 carbon atoms, an optionally substituted cycloalkyl group containing 5 to 20 carbon atoms, an optionally substituted cycloalkoxyl group containing 5 to 20 carbon atoms, and an optionally substituted aryl group containing 6 to 20 carbon atoms,
Y₁ is a single bond, an optionally substituted fluorene group, or any of structural formulae represented by the following formulae (1) to (7): 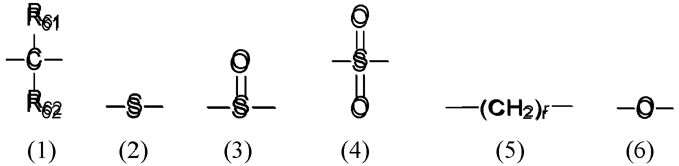 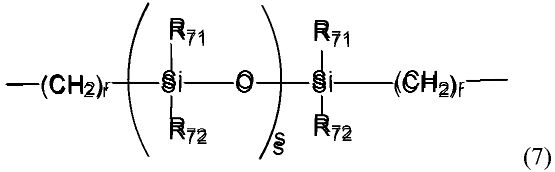 (in formulae (1) to (7),
R₆₁, R₆₂, R₇₁ and R₇₂ each independently represent a hydrogen atom, a halogen atom, an optionally substituted alkyl group containing 1 to 20 carbon atoms, or an optionally substituted aryl group containing 6 to 30 carbon atoms, or alternatively, R₆₁ and R₆₂, or R₇₁ and R₇₂ are joined together to form an optionally substituted carbocyclic or heterocyclic ring containing 1 to 20 carbon atoms, and
r and s each independently represent an integer of 0 to 5000)
A and B each independently represent an optionally substituted alkylene group containing 1 to 5 carbon atoms,
p and q each independently represent an integer of 0 to 4, and
a and b each independently represent an integer of 0 to 10).

5. The production method according to any one of claims 1 to 4, wherein a catalyst comprising an alkali metal or an alkaline earth metal is used.

6. The production method according to any one of claims 1 to 5, wherein the catalyst is used in an amount of 0.1 to 10 ppm relative to the thermoplastic resin.

7. The production method according to any one of claims 1 to 6, wherein the thermoplastic resin has a weight average molecular weight (Mw) of 10,000 to 100,000 when calculated as polystyrene.

8. The production method according to any one of claims 1 to 7, wherein the thermoplastic resin has a YI of 0.1 to 14.

9. A thermoplastic resin comprising a constituent unit (A) derived from a crystal of a dicarboxylic acid diester represented by the following formula (a), wherein the crystal of the dicarboxylic acid diester satisfies at least one of the requirements: (i) having a maximum melting endothermic temperature of 177°C to 181°C as measured by differential scanning calorimetric analysis; and (ii) having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation

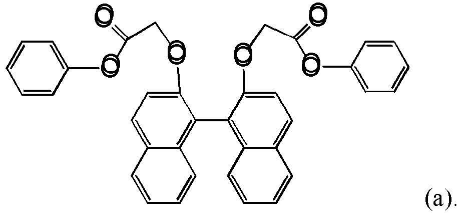

10. The thermoplastic resin according to claim 9, wherein the crystal of the dicarboxylic acid diester satisfies both the requirements: (i) having a maximum melting endothermic temperature of 177°C to 181°C as measured by differential scanning calorimetric analysis; and (ii) having peaks at diffraction angles 2θ = 7.6 ± 0.2°, 8.7 ± 0.2°, 18.0 ± 0.2°, 19.2 ± 0.2°, 19.7 ± 0.2° and 21.9 ± 0.2° in its powder X-ray diffraction pattern with Cu-Kα radiation.

11. The thermoplastic resin according to claim 9 or 10, wherein the thermoplastic resin is a polyester resin or a polyester carbonate resin.

12. An optical member, which comprises the thermoplastic resin according to any one of claims 9 to 11.

13. An optical lens, which comprises the thermoplastic resin according to any one of claims 9 to 11.

14. An optical film, which comprises the thermoplastic resin according to any one of claims 9 to 11.
